# EUROPEAN PATENT APPLICATION

(11) **EP 4 219 145 A1**
(43) Date of publication of application: **02.08.2023**
(21) Application number: 21872623.0
(22) Date of filing: 28.09.2021
(51) Int. Cl.: B32B 9/00, B32B 27/00, B32B 27/30, B32B 27/40, G03H 1/02, G03H 1/18, G02B 1/14, G09F 19/12, G02B 5/32, G09F 9/00, B32B 7/023, G02F 1/1335, B32B 33/00, G02B 27/01, G02B 27/02

(54) **LIGHT GUIDE PLATE FOR IMAGE DISPLAY**

(30) Priority: 28.09.2020 JP 2020162090; 28.09.2020 JP 2020162484; 29.09.2020 JP 2020163145; 23.12.2020 JP 2020213349; 23.12.2020 JP 2020213350; 25.02.2021 JP 2021028831
(71) Applicant: Mitsubishi Chemical Corporation, Chiyoda-ku Tokyo 100-8251 (JP)
(72) Inventor: KANAI Shinichiro, Tokyo 100-8251 (JP); KUBO Shuichi, Tokyo 100-8251 (JP); WATANABE Takayuki, Tokyo 100-8251 (JP); WAKAYAMA Yoshio, Tokyo 100-8251 (JP)
(74) Representative: Hoffmann Eitle
(86) International application number: PCT/JP2021/035484
(87) International publication number: WO 2022/065498

(57) **Abstract**

Alight guide plate for image display includes: a first laminate (11) configured to be provided with a first resin base (1), a first anchor coat layer (2), and a first barrier layer (3) in this order; and a hologram layer (4). The first barrier layer (3) is made of silicon oxynitride as a main component and a nitrogen element formulation, which is determined by X-ray photoelectron spectroscopy (XPS), in the first barrier layer (3) is greater than 0 atm% and 25 atm% or less.

## Description

### [Technical Field]

The present invention relates to a light guide plate for image display.

Priority is claimed on Japanese Patent Application Nos. 2020-162090 and 2020-162484 filed September 28, 2020, Japanese Patent Application No. 2020-163145 filed September 29, 2020, Japanese Patent Application Nos. 2020-213349 and 2020-213350 filed December 23, 2020 and Japanese Patent Application No. 2021-028831 filed February 25, 2021, the contents of which are incorporated herein by reference.

### [Background Art]

In a display device, a light guide plate for image display may be used. For example, in a display device using a virtual reality (VR) technique or an augmented reality (AR) technique, a light guide plate for image display in which a hologram layer is supported by a transparent base is used. The hologram layer is formed with holograms having various optical functions such as waveguiding, reflection, and diffraction.

Materials used as hologram materials for forming hologram layers are often photosensitive compositions that include bases such as radically polymerizable monomers, polyhydric acids or amines, which may deteriorate the resin base. The hologram materials are also known to deteriorate due to moisture absorption. For this reason, the display device in which the hologram layer is supported by the resin base tends to deteriorate in a high-temperature and high-humidity environment.

Patent Document 1 describes a method of forming a photosensitive material layer for forming a hologram on an optically transparent resin base member, and coating the photosensitive material layer with an aqueous polymer protective barrier. Patent Document 1 suggests that the aqueous polymer protective barrier is provided for the purpose of withstanding an attack by moisture.

### [Citation List]

### [Patent Document]

[Patent Document 1]
Japanese Unexamined Patent Application, First Publication No. H05-181400

### [Summary of Invention]

### [Technical Problem]

However, the technique described in Patent Document 1 has the following problems.

In the technique described in Patent Document 1, a resin base member is in close contact with the surface of the photosensitive material layer opposite to the aqueous polymer protective barrier.

Therefore, the photosensitive material may erode the resin base member in a high-temperature environment.

Further, since the inside of the resin base member includes moisture, moisture diffuses into the photosensitive material layer through the contact surface with the photosensitive material layer. In addition, since the base member is exposed to the outside, moisture continues to permeate the base member from the outside. As a result, moisture permeates the photosensitive material layer through the resin base member. Thus, even when the moisture is blocked by the aqueous polymer protective barrier, it is not possible to suppress the photosensitive material layer from deteriorating over time due to the moisture from the base member side.

An object of the present invention is to provide a light guide plate for image display capable of suppressing deterioration of a hologram layer.

### [Solution to Problem]

<1> A light guide plate for image display, comprising: a laminate that is provided with a resin base, an anchor coat layer, and a barrier layer in this order; and a hologram layer, wherein the barrier layer is made of silicon oxynitride as a main component and a nitrogen element formulation, which is determined by X-ray photoelectron spectroscopy (XPS), in the barrier layer is greater than 0 atm% and 25 atm% or less.
<2> A light guide plate for image display, in which a laminate, which is configured to be provided with a resin base, an anchor coat layer, and a barrier layer in this order, and a hologram layer are disposed in this order, a thickness of the barrier layer is 150 nm or less, a total thickness of the anchor coat layer and the barrier layer is 300 nm or less, and a tan δ peak temperature in viscoelasticity measurement of the anchor coat layer is 80°C or less.
<3> A light guide plate for image display, including: a laminate that is provided with a resin base, an anchor coat layer, and a barrier layer in this order; and a hologram layer, in which assuming that a thickness of the anchor coat layer is Anm and a tan δ peak temperature in the viscoelasticity measurement of the anchor coat layer is B°C, A/B is 3 or less.
<4> A light guide plate for image display, including: a laminate that is provided with a resin base, an anchor coat layer, and a barrier layer in this order; and a hologram layer, in which the anchor coat layer consists of a binder resin having a hydroxyl group and a resin composition that contains an isocyanate compound, and a molar ratio NCO/OH of the isocyanate groups (NCO) of the isocyanate compound to the hydroxyl groups (OH) of the binder resin is 0.8 or greater.
<5> A light guide plate for image display, in which a laminate, which has a resin base and a protective layer, and a hologram layer are disposed in this order, and a surface roughness Sa of the protective layer on a side where the protective layer is in contact with the hologram layer is less than 5.5 nm.
<6> A light guide plate for image display, in which a resin base, a barrier layer, and a hologram layer are disposed in this order, and a specular glossiness of a laminate including the resin base and the barrier layer at an incidence angle of 60 degrees on a side where the laminate is in contact with the hologram layer is 120% or greater.

### [Advantageous Effects of Invention]

According to the present invention, light guide plates for image display capable of suppressing deterioration of the hologram layer can be provided.

### [Brief Description of Drawings]

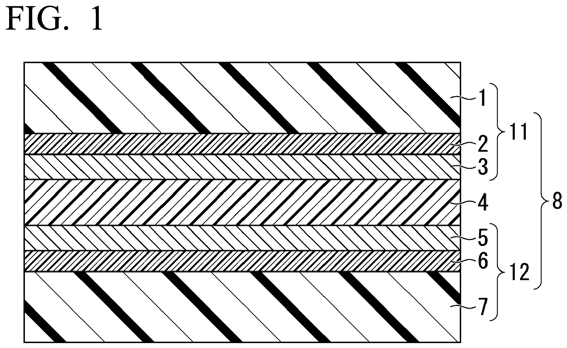

FIG. 1 is a schematic cross-sectional view showing an example of a light guide plate for image display of the present invention.

### [Description of Embodiments]

In the present invention, when "to" is used to indicate a numerical range, the numerical values on both sides of "to" are included in the numerical range.

In the present invention, the term "(meth)acryl" includes "acryl" and "methacryl". For example, the term "poly(meth)acryl-based resin" includes "polyacryl-based resin" and "polymethacryl-based resin". In a similar manner, the term "(meth)acrylate" includes "acrylate" and "methacrylate", the term "(meth)acryloyl" includes "acryloyl" and "methacryloyl", and the term "(meth)acryloyloxy" includes "acryloyloxy" and "methacryloyloxy".

Hereinafter, embodiments of the present invention will be described. Here, the present invention is not limited to the embodiments described later and various modifications can be made without departing from the gist of the present invention.

### <<First Embodiment>>

Alight guide plate for image display according to a first embodiment of the present invention includes: a laminate that is provided with a resin base, an anchor coat layer, and a barrier layer in this order; and a hologram layer, in which the barrier layer is made of silicon oxynitride as a main component and a nitrogen element formulation, which is determined by X-ray photoelectron spectroscopy (XPS), in the barrier layer is greater than 0 atm% and 25 atm% or less.

The light guide plate for image display of the present embodiment is able to suppress deterioration of the hologram layer and has favorable optical characteristics since the barrier layer has the above-mentioned characteristics.

In the light guide plate for image display of the present embodiment, the resin base may include at least one resin selected from the group consisting of poly(meth)acryl-based resin, epoxy resin, cyclic polyolefin-based resin, and polycarbonate-based resin.

In the light guide plate for image display of the present embodiment, the anchor coat layer may include at least one resin selected from the group consisting of acryl-based resin, urethane-based resin, and polyester-based resin.

In the light guide plate for image display of the present embodiment, the laminate may have hard coat layers on both surfaces of the resin base.

In the light guide plate for image display of the present embodiment, a total ray transmittance of the laminate may be 90% or more.

In the light guide plate for image display of the present embodiment, a haze of the laminate may be less than 0.1%.

In the light guide plate for image display of the present embodiment, b* of the laminate measured by a spectroscopic colorimeter may be less than 0.5.

In the light guide plate for image display of the present embodiment, the moisture vapor permeability of the laminate may be less than 0.01 g/m²/day.

Hereinafter, the light guide plate for image display according to the present embodiment will be described in detail.

### <Light Guide plate for Image Display>

The light guide plate for image display of the present embodiment has a laminate including a resin base, an anchor coat layer, and a barrier layer, and a hologram layer. The resin base, the anchor coat layer, the barrier layer, and the hologram layer are disposed in this order in a thickness direction. The laminate may be disposed on at least one surface of the hologram layer, but may be disposed on both surfaces of the hologram layer. When the laminates are disposed on both surfaces of the hologram layer, the laminate disposed on one surface of the hologram layer is referred to as a first laminate, and the laminate disposed on the other surface of the hologram layer is referred to as a second laminate. In such a case, the hologram layer is interposed between a first barrier layer of the first laminate and a second barrier layer of the second laminate. A first anchor coat layer and a first resin base are laminated on the other surface of the first barrier layer. A second anchor coat layer and a second resin base are laminated on the other surface of the second barrier layer. In the present embodiment, the first laminate and the second laminate may be collectively referred to as simply the "laminate" hereinafter. Hereinafter, the first resin base and the second resin base may be collectively referred to as simply the "resin base". Further, the first anchor coat layer and the second anchor coat layer may be collectively referred to as simply the "anchor coat layer" hereinafter. Furthermore, the first barrier layer and the second barrier layer may be collectively referred to as simply the "barrier layer" hereinafter.

One or more transparent layers may be disposed between the resin base and the anchor coat layer, between the anchor coat layer and the barrier layer, and between the barrier layer and the hologram layer. Examples of the transparent layers include a hard coat layer.

Further, the anchor coat layer, the barrier layer and the transparent layer may be disposed on one surface of the resin base, but may be disposed on both surfaces of the resin base. That is, a configuration may be employed in which the barrier layer, the anchor coat layer, the resin base, the anchor coat layer, the barrier layer, and the hologram layer are disposed in this order in the thickness direction, or a configuration may be employed in which the barrier layer, the anchor coat layer, the transparent layer, the resin base, the transparent layer, the anchor coat layer, the barrier layer, and the hologram layer are disposed in this order in the thickness direction.

The light guide plate for image display has an incidence portion on which image light is incident and a display portion that displays an image formed by the image light.

The hologram layer is disposed between the incidence portion and the display portion. A diffraction grating pattern is formed on the hologram layer for guiding at least the image light incident from the incidence portion to the display portion and for emitting the image light from the display portion.

The diffraction grating pattern in the display portion transmits at least part of external light incident from the outside of the light guide plate for image display. In addition, the external light is incident from a surface opposite to the display portion.

The image light incident on the incidence portion is guided into the hologram layer and emitted from the display portion to the outside. On the other hand, the external light also is transmitted through the resin base and the display portion. As a result, an observer of the display portion is able to observe both the image light and the external light within the field of view.

The light guide plate for image display of the present embodiment can be used in a display device or the like using a virtual reality (VR) technique or an augmented reality (AR) technique. For example, the light guide plate can be used for in-vehicle displays or sports sunglasses for outdoor use.

Further, in addition to display applications, the light guide plate for image display of the present embodiment can be used in devices such as a holographic optical element (HOE) which is typified by a combiner for a head-up display (HUD) for mounting on a vehicle or a reflector for a reflective liquid crystal display device.

Hereinafter, a detailed configuration of an example of the light guide plate for image display of the present embodiment will be described on the basis of an example shown in FIG. 1. FIG. 1 is a schematic cross-sectional view showing an example of the light guide plate for image display of the present embodiment.

In a light guide plate for image display 8 shown in FIG. 1, a first resin base 1, a first anchor coat layer 2, a first barrier layer 3, a hologram layer 4, a second barrier layer 5, and a second anchor coat layer 6 and a second resin base 7 are disposed in this order in the thickness direction.

A plan view shape of the light guide plate for image display 8 is not particularly limited. For example, the light guide plate for image display 8 may be formed in a shape in which the light guide plate can be provided on the display device used.

For example, the light guide plate for image display 8 may be a rectangular plate larger than the shape in which the light guide plate is provided on the display device. In such a case, the light guide plate for image display 8 is formed by being cut into a shape in which the light guide plate can be provided on the display device before being assembled into the display device.

The light guide plate for image display 8 may have a flat plate shape, or may have a curved plate shape as necessary.

In the following, an example of a case will be described in which the light guide plate for image display 8 is made of a flat plate having a rectangular shape in plan view.

### [First Laminate 11]

A first laminate 11 includes the first resin base 1, the first anchor coat layer 2, and the first barrier layer 3 in this order. By disposing the first laminate 11 on the surface of the hologram layer 4, the light guide plate for image display 8 is able to suppress deterioration of the hologram layer and obtain favorable optical characteristics.

### (Optical Characteristics)

Although a total ray transmittance of the first laminate 11 is not particularly limited, the total ray transmittance is preferably 90% or greater, more preferably 91% or greater, and yet more preferably 92% or greater. When the total ray transmittance of the first laminate 11 is 90% or more, a luminance value of the light guide plate for image display 8 is improved.

Further, from the same viewpoint, a haze of the first laminate 11 is preferably less than 0.1%, more preferably less than 0.08%, yet more preferably less than 0.06%, and most preferably less than 0.05%.

An absolute value of b^{∗} of the first laminate 11 measured with a spectroscopic colorimeter is preferably less than 0.8, more preferably less than 0.6, and yet more preferably less than 0.5. Further, in the range, the absolute value is preferably less than 0.4, more preferably less than 0.3, and yet more preferably less than 0.1. When the absolute value of b^{∗} of the first laminate 11 is less than 0.8, a luminance value and a sharpness of the light guide plate for image display 8 are improved.

### (Barrier Property)

The moisture vapor permeability of the first laminate 11 is preferably less than 0.01 g/m²/day, more preferably less than 0.008 g/m²/day, yet more preferably less than 0.006 g/m²/day, and most preferably less than 0.004 g/m²/day. When the moisture vapor permeability of the first laminate 11 is less than 0.01 g/m²/day, deterioration of the hologram layer 4 can be further suppressed.

### [First Resin Base 1]

The first resin base 1 is disposed at the outermost portion of the light guide plate for image display 8 in the thickness direction. The first resin base 1 is disposed on a surface of the light guide plate for image display 8 on a display image emission side.

The first resin base 1 has a shape similar to an outer shape of the light guide plate for image display 8.

The first resin base 1 transmits image light emitted from the hologram layer 4 and external light transmitted through the second resin base 7 and the hologram layer 4 described later.

Although a thickness of the first resin base 1 is not particularly limited, the thickness is preferably in a range of 0.05 to 10 mm.

Although a lower limit of the thickness of the first resin base 1 is not particularly limited, the lower limit is preferably 0.1 mm or greater, and more preferably 0.2 mm or greater, from the viewpoint of improving scratch resistance.

Although an upper limit of the thickness of the first resin base 1 is not particularly limited, the upper limit is preferably 5 mm or less, more preferably 3 mm or less, and yet more preferably 2 mm or less, from the viewpoint of improving moldability and total ray transmittance.

In the present specification, the thickness of the first resin base 1 can be measured by a dial gauge method using a stylus, a micrometer, or the like.

Although the total ray transmittance of the first resin base 1 is not particularly limited, the total ray transmittance is preferably 80% or greater, and more preferably 90% or greater. When the total ray transmittance of the first resin base 1 is 80% or greater, the luminance value of the light guide plate for image display 8 is improved.

It is preferable that the first resin base 1 include a thermoplastic resin from the viewpoint of improving the optical characteristics, the impact resistance, the scratch resistance, and the moldability.

Examples of the thermoplastic resin include: polyolefin-based resins such as homopolymers or copolymers of alkenes such as ethylene, propylene and butene; amorphous polyolefin-based resins such as cyclic polyolefin-based resin; polyester-based resins such as polyethylene terephthalate (PET) and polyethylene naphthalate (PEN); cellulose-based resins such as triacetyl cellulose, diacetyl cellulose, and cellophane; polyamide-based resins such as nylon 6, nylon 66, nylon 12, and copolymerized nylon; ethylene-vinyl acetate copolymer partial hydrolyzate (EVOH); polyimide-based resins; polyetherimide-based resins; polysulfone-based resins; polyethersulfone-based resins; polyetheretherketone-based resins; polycarbonate-based resins; polyvinyl butyral-based resins; polyarylate-based resins; fluorine-based resins; poly(meth)acryl-based resin; styrene-based resins such as polystyrene; polyvinyl alcohol; ethylene vinyl alcohol copolymer, polyvinyl chloride; cellulose; acetyl cellulose; polyvinylidene chloride; polyphenylene sulfide; polyurethane; phenolic resin; epoxy resins; polynorbornene; styrene-isobutylene-styrene block copolymers (SIBS); allyl diglycol carbonate; and organic materials such as biodegradable resins. The thermoplastic resins can be used singly or in combination of two or more. Further, the first resin base 1 may have a configuration in which layers made of two or more materials selected from the group consisting of thermoplastic resins are laminated.

In the present embodiment, from the viewpoint of transparency, at least one resin selected from the group consisting of poly(meth)acryl-based resins, epoxy resins, cyclic polyolefin-based resin and polycarbonate-based resins is preferable.

Among the resins, poly(meth)acryl-based resins are preferable since the resins have excellent scratch resistance and moldability.

### (Poly(meth)acryl-based Resin)

Examples of monomers constituting the poly(meth)acryl-based resin include methyl methacrylate, methacrylic acid, acrylic acid, benzyl (meth)acrylate, n-butyl (meth)acrylate, and i-butyl (meth)acrylate, t-butyl (meth)acrylate, 2-ethylhexyl (meth)acrylate, lauryl (meth)acrylate, tridecyl (meth)acrylate, stearyl (meth)acrylate, glycidyl (meth)acrylate, hydroxypropyl (meth)acrylate, 2-methoxyethyl (meth)acrylate, 2-ethoxyethyl (meth)acrylate, cyclohexyl (meth)acrylate, isobornyl (meth)acrylate, norbornyl (meth)acrylate, dicyclopentenyl (meth)acrylate, dicyclopentanyl (meth)acrylate, dicyclopentenyloxyethyl (meth)acrylate, tetrahydrofurfuryl (meth)acrylate, acrylic (meth)acrylate, 2-hydroxyethyl (meth)acrylate, 2-(meth)acryloyloxyethyl succinate, 2-(meth)acryloyloxyethyl maleate, 2-(meth)acryloyloxyethyl phthalate, 2-(meth)acryloyloxyethyl hexahydrophthalate, pentamethylpiperidyl (meth)acrylate, tetramethylpiperidyl (meth)acrylate, dimethylaminoethyl (meth)acrylates, and diethylaminoethyl (meth)acrylates. The monomers may be used by polymerizing alone, or two or more of the monomers may be polymerized and used.

Further, other monomers copolymerizable with the monomers constituting the poly(meth)acryl-based resin may be added. The other monomers may be monofunctional monomers, that is, compounds each having one polymerizable carbon-carbon double bond in the molecule, or may be polyfunctional monomers, that is, compounds each having at least two polymerizable carbon-carbon double bonds in the molecule.

Examples of the monofunctional monomers include aromatic alkenyl compounds such as styrene, α-methylstyrene and vinyltoluene, alkenyl cyanide compounds such as acrylonitrile and methacrylonitrile, acrylic acid, methacrylic acid, maleic anhydride, and N-substituted maleimides.

Examples of the polyfunctional monomers include: polyunsaturated carboxylic acid esters of polyhydric alcohols such as ethylene glycol dimethacrylate, butanediol dimethacrylate, and trimethylolpropane triacrylate; alkenyl esters of unsaturated carboxylic acids such as allyl acrylate, allyl methacrylate, and allyl cinnamate; polyalkenyl esters of polybasic acids such as diallyl phthalate, diallyl maleate, triallyl cyanurate and triallyl isocyanurate; and aromatic polyalkenyl compounds such as divinylbenzene.

The monofunctional monomer and the polyfunctional monomer may be used singly or in combination of two or more.

The poly(meth)acryl-based resin can be produced by polymerizing the monomer components described above by a known method such as suspension polymerization, emulsion polymerization, or bulk polymerization.

### [First Anchor Coat Layer 2]

The first anchor coat layer 2 is disposed between the first resin base 1 and the first barrier layer 3.

By providing the first anchor coat layer 2, adhesiveness between the first resin base 1 and the first barrier layer 3 is improved, and the barrier properties are improved.

The first anchor coat layer 2 also serves to relieve residual stress that occurs when the first barrier layer 3 described later is formed by dry film formation. Further, deformation of the first barrier layer 3 under a moist heat environment (for example, 40°C, 90%RH) can be suppressed, and an increase in haze of the light guide plate for image display 8 can be prevented.

From the viewpoint of sufficiently relaxing the residual stress of the first barrier layer 3, the thickness of the first anchor coat layer 2 is preferably 1 nm or greater, more preferably 3 nm or greater, and yet more preferably 5 nm or greater.

On the other hand, from the viewpoint of preventing the first barrier layer 3 from being excessively deformed by the residual stress, the thickness of the first anchor coat layer 2 is preferably 200 nm or less, more preferably 150 nm or less, and yet more preferably 100 nm or less.

From the viewpoint of sufficiently relaxing the residual stress of the first barrier layer 3 and preventing the first barrier layer 3 from being excessively deformed by the residual stress, the thickness of the first anchor coat layer 2 is preferably in a range of 1 to 200 nm, more preferably in a range of 3 to 150 nm, and yet more preferably in a range of 5 to 100 nm.

The thickness of the first anchor coat layer 2 can be measured by observing the cross section of the light guide plate for image display 8 with a TEM.

When the first resin base 1 is made of a highly hygroscopic resin such as poly(meth)acryl-based resin, the first resin base 1 may expand in a moist heat environment. From the viewpoint of following the expansion of the first resin base 1 in a moist heat environment, a tan δ peak temperature of the first anchor coat layer 2 in the viscoelasticity measurement is preferably 80°C or less, and more preferably 75°C or less.

On the other hand, from the viewpoint of preventing the first anchor coat layer 2 from being excessively deformed by the residual stress of the first barrier layer 3, the tan δ peak temperature of the first anchor coat layer 2 in the viscoelasticity measurement is preferably 10°C or higher, more preferably 15°C or higher, and yet more preferably 20°C or higher.

Further, the first anchor coat layer 2 is able to follow the expansion of the first resin base 1 in a moist heat environment, and the residual stress of the first barrier layer 3 prevents the first anchor coat layer 2 from being excessively deformed. From the viewpoint, the tan δ peak temperature of the first anchor coat layer 2 in the viscoelasticity measurement is preferably in a range of 10 to 80°C, more preferably in a range of 15 to 80°C, and yet more preferably in a range of 20 to 75°C.

In the present specification, the tan δ peak temperature is a peak temperature of the loss tangent (tan δ) when a sheet having a thickness of 200 µm from the first anchor coat layer 2 is provided and viscoelasticity measurement is performed under the conditions of a frequency of 1 Hz, a heating rate of 3°C/min, and a measurement temperature of -50 to 200°C by using a dynamic viscoelasticity measurement device (DVA-200, manufactured by IT Instrument Control Co., Ltd.).

Although the total ray transmittance of the first anchor coat layer 2 is not particularly limited, the total ray transmittance is preferably 80% or greater, and more preferably 90% or greater. When the total ray transmittance of the first anchor coat layer 2 is 80% or greater, the luminance value of the light guide plate for image display 8 is improved.

Further, assuming that an average refractive index of the first resin base 1 and the first barrier layer 3 is n1, the refractive index n2 of the first anchor coat layer 2 is preferably in a range of n1±0.20, more preferably in the range of n1±0.15, and yet more preferably in the range of n1±0.10. When the refractive index n2 of the first anchor coat layer 2 is in a range of n1±0.20, the luminance value of the light guide plate for image display 8 can be improved and color unevenness can be prevented.

It should be noted that the refractive index is measured with an Abbe refractometer (NAR-4T, manufactured by Atago Corp.).

The material of the first anchor coat layer 2 is not particularly limited, but examples thereof include thermoplastic resins and curable resins.

Examples of the thermoplastic resins include fluorine-based resins, polyethersulfone-based resins, polycarbonate-based resins, acryl-based resins, silicone-based resins, cycloolefin-based resins, thermoplastic polyimide-based resins, polyamide-based resins, polyamideimide-based resins, polyarylate-based resins, polysulfone-based resins, polyetherimide-based resins, polyetheretherketone-based resins, polyether silicone-based resins, polyester-based resins, and polyphenylene sulfide-based resins.

Examples of the curable resins include acryl-based resins, urethane-based resins, epoxy resins, and silicone-based resins.

Among the resins, acryl-based resins and polyester-based resins are preferable as thermoplastic resins from the viewpoint of moisture vapor barrier properties.

The resin composition constituting the first anchor coat layer 2 may include, as additives, a silane coupling agent, a sensitizer, a cross-linker, an ultraviolet absorber, a polymerization inhibitor, a surfactant agent, a filler, a release agent, and a thermoplastic resin. The additives can be used singly or in combination of two or more.

It is preferable that among the additives, the first anchor coat layer 2 include a cross-linker. Examples of the cross-linker include isocyanate-based cross-linkers, peroxide-based cross-linkers, epoxy-based cross-linkers, and imine-based cross-linkers. Here, isocyanate-based cross-linkers are preferable. The content of the cross-linker is preferably in a range of 0 to 20 parts by mass, and more preferably in a range of 5 to 15 parts by mass, with respect to the thermoplastic resin or the curable resin of 100 parts by mass.

As a method of forming the first anchor coat layer 2, for example, a resin composition for forming the first anchor coat layer 2 is applied to the first resin base 1, and the first barrier layer 3 is further laminated thereon. Thereby, the laminate can be processed and formed by methods such as pressing, nip rolling, heat lamination, and the like. When the first anchor coat layer 2 consists of a curable resin, the formation of the first anchor coat layer 2 may include a curing step.

### [First Barrier Layer 3]

The first barrier layer 3 is disposed between the first anchor coat layer 2 and the hologram layer 4 described later.

The first barrier layer 3 prevents gases such as moisture vapor and oxygen permeating from the outside of the light guide plate for image display 8 and the first resin base 1 from permeating and deteriorating the hologram layer 4.

Therefore, the smaller the oxygen permeability and moisture vapor permeability of the first barrier layer 3, the better.

The oxygen permeability of the first barrier layer 3 is preferably 1 cm³/m²/day/atm or less.

Further, the moisture vapor permeability of the first barrier layer 3 is preferably 1 g/m²/day or less, more preferably 0.5 g/m²/day or less, and yet more preferably 0.1 g/m²/day or less.

Here, the oxygen permeability is an oxygen permeability measured using an oxygen permeability measurement device (OX-TRAN 2/21, manufactured by MOCON). Furthermore, the moisture vapor permeability is measured using a moisture vapor permeability measurement device (DELTAPERM, manufactured by Technolox).

The first barrier layer 3 is made of silicon oxynitride as a main component. Here, "the main component of the first barrier layer 3" refers to a component that accounts for 50% by mass or greater of all the components that constitute the first barrier layer 3. A ratio of silicon oxynitride in the first barrier layer 3 is not particularly limited as long as the ratio is 50% by mass or greater with respect to the total mass of the first barrier layer. However, the ratio is preferably 60% by mass or greater, more preferably 70% by mass or greater, and yet more preferably 80% by mass or greater.

The nitrogen element formulation in the first barrier layer 3 determined by X-ray photoelectron spectroscopy (XPS) is greater than 0 atm% and 25 atm% or less, preferably 2 atm% or greater and 23 atm% or less, more preferably 5 atm% or greater and 20 atm% or less, and yet more preferably 10 atm% or greater and 17 atm% or less. When the nitrogen element formulation is in the above-mentioned range, the transparency of the first barrier layer 3 is high. Therefore, the optical characteristics of the light guide plate for image display 8 are improved.

When the first barrier layer 3 is formed by dry film formation, residual stress may be generated such that the first barrier layer 3 curls outward. From the viewpoint of preventing the residual stress from becoming excessively large, the thickness of the first barrier layer 3 is preferably 150 nm or less, and more preferably 130 nm or less.

On the other hand, from the viewpoint of improving barrier properties, the thickness of the first barrier layer 3 is preferably 5 nm or greater, and more preferably 10 nm or greater.

From the viewpoint of preventing the first barrier layer 3 from being deformed by the residual stress, the total thickness of the first anchor coat layer 2 and the first barrier layer 3 is preferably 300 nm or less, more preferably 250 nm or less, and yet more preferably 200 nm or less.

On the other hand, from the viewpoint of sufficiently relaxing the residual stress with the first anchor coat layer 2 and improving the barrier properties of the first barrier layer 3, the total thickness of the first anchor coat layer 2 and the first barrier layer 3 is preferably 30 nm or greater, and more preferably 50 nm or greater.

It is preferable that the first barrier layer 3 have a higher refractive index than the first resin base 1. For example, when an acryl-based resin is used as the first resin base 1, the refractive index of the first barrier layer 3 is preferably 1.48 or greater, and more preferably 1.48 or greater and 3.0 or less. When the first barrier layer 3 has a higher refractive index than the first resin base 1, the light transmitted through the first barrier layer 3 and the first resin base 1 is incident from the first barrier layer 3, which is optically dense, onto the first resin base 1, which is optically coarse. Thus, the exit angle of light from the first barrier layer 3 to the first resin base 1 is larger depending on the difference in refractive index between the first barrier layer 3 and the first resin base 1. Thereby, the field of view (FOV) in the light guide plate for image display can be widened.

The first barrier layer 3 can be formed by a conventionally known film formation method such as a vacuum deposition method, a sputtering method, an ion plating method, or a plasma CVD method. Among the methods, the sputtering method is preferable as the film formation method from the viewpoint of obtaining a favorable barrier property and improving the sharpness of the light guide plate for image display 8.

In order to improve the adhesiveness between the first anchor coat layer 2 and the first barrier layer 3, the surface of the first anchor coat layer 2 is subj ected to corona discharge treatment or low-temperature plasma treatment, or is subjected to a surface treatment such as coating with a silane coupling agent or coating with a mixture of saturated polyester and isocyanate.

When the first barrier layer 3 is formed by, for example, a vacuum deposition method, silicon, silicon monoxide, silicon dioxide, silicon oxynitride, or a mixture thereof is used as the evaporation material, and is heated and evaporated by an electron beam, resistance heating, or high-frequency heating method under a vacuum in a range of 1.0×10⁻³ to 2.0×10⁻¹ Pa.

Further, as a film formation method, for example, a reactive vapor deposition method performed while oxygen gas or nitrogen gas is supplied can be adopted.

Furthermore, in the case of forming a film by sputtering, for example, silicon, silicon monoxide, silicon dioxide, silicon oxynitride, or a mixture thereof is used as a target, and a film thereof can be formed under a vacuum in a range of 1.0×10⁻² to 5.0×10⁻¹ Pa.

As the sputtering method, for example, a reactive sputtering method performed while oxygen gas, nitrogen gas, or argon gas is supplied can also be adopted.

The nitrogen element formulation in the first barrier layer 3 can be adjusted by the nitrogen flow rate, electric power, and film formation pressure during film formation.

In particular, in order to make the nitrogen element formulation greater than 0 atm% and 25 atm% or less, the ratio O₂/N₂ between the oxygen flow rate O₂ [sccm] and the nitrogen flow rate N₂ [sccm] is preferably in a range of 0.10 to 1.5, more preferably in a range of 0.12 to 1.0, and yet more preferably 0.15 or greater.

Further, the electric power is preferably in a range of 1000 to 2000 W. Since the O₂/N₂ and the electric power affect each other, the electric power is preferably 1000 W or greater and less than 1500 W when the O₂/N₂ is 0.10 or greater and less than 0.15, and the electric power is preferably 1500 W or greater and 2000 W or less when the O₂/N₂ is 0.15 or greater and 1.5 W or less. Furthermore, the film formation pressure is preferably 1.0×10⁻² to 2.0×10⁻¹ Pa, and more preferably 5.0×10⁻² to 1.5×10⁻¹ Pa.

Silicon oxynitride forming the first barrier layer 3 may have calcium, magnesium, or oxides thereof mixed therein as impurities as long as the impurities are 10% by mass or less.

Further, the first barrier layer 3 may include an inorganic material other than the silicon oxynitride. Examples of the inorganic material include silicon oxide, diamond-like carbon (DLC), and aluminum oxide.

### [Hologram Layer 4]

The hologram layer 4 is disposed on a surface of the first barrier layer 3 opposite to a surface to which the first anchor coat layer 2 adheres. The hologram layer 4 is appropriately formed with a diffraction grating corresponding to a function that the light guide plate for image display 8 should have.

The material of the hologram layer 4 is not particularly limited, and it is possible to use a known hologram-forming resin material.

Examples of the material of the hologram layer 4 include a hologram recording material including a thermosetting resin having at least one solvent-soluble and cationically polymerizable ethylene oxide ring in a structural unit and a radically polymerizable ethylenic monomer (Japanese Unexamined Patent Application, First Publication Nos. H09-62169, H1 1-161141, and 2002-310932).

Specifically, it is preferable that the hologram layer 4 be formed of a photosensitive material including epoxy resin such as bisphenol-based epoxy resin, (meth)acrylate such as triethylene glycol diacrylate, a photopolymerization initiator such as 4,4'-bis(tert-butylphenyl)iodonium hexafluorophosphate, a wavelength sensitizer such as 3,3'-carbonylbis(7-diethylamino)coumarin, and an organic solvent such as 2-butanone.

### [Second Laminate 12]

The second laminate 12 includes the second barrier layer 5, the second anchor coat layer 6, and the second resin base 7 in this order. Various physical properties of the second laminate 12 may be different from the physical properties of the first laminate 11.

### [Second Barrier Layer 5]

The second barrier layer 5 is laminated on an opposite side of the first barrier layer 3 with the hologram layer 4 interposed therebetween. As the second barrier layer 5, the same configuration as in the description of the first barrier layer 3 is used. However, the thickness, material, and the like of the second barrier layer 5 may be different from those of the first barrier layer 3.

### [Second Anchor Coat Layer 6]

The second anchor coat layer 6 is disposed between the second barrier layer 5 and the second resin base 7. As the second anchor coat layer 6, the same configuration as in the description of the first anchor coat layer 2 is used. However, the thickness, material, and the like of the second anchor coat layer 6 may be different from those of the first anchor coat layer 2.

### [Second Resin Base 7]

The second resin base 7 is laminated on the surface of the second anchor coat layer 6. As the second resin base 7, the same configuration as in the description of the first resin base 1 is used. However, the thickness, material, and the like of the second resin base 7 may be different from those of the first resin base 1. In particular, the second resin base 7 is disposed on the surface of the light guide plate for image display 8 on the external light incident side located opposite to the display image emission side. Therefore, the second resin base 7 may employ a material of which the surface hardness is higher than that of the first resin base 1.

### [Light Guide plate for Image Display 8]

In the light guide plate for image display 8, the first anchor coat layer 2 and the first barrier layer 3 are disposed between the first resin base 1 and the hologram layer 4 and the second barrier layer 5 and the second anchor coat layer 6 are disposed between the second resin base 7 and the hologram layer 4.

The gas outside the light guide plate for image display 8 permeates the first resin base 1 and the second resin base 7 to some extent, or accumulates inside. At this time, moisture is particularly likely to accumulate in the first resin base 1 and the second resin base 7.

However, according to the configuration of the present embodiment, the first barrier layer 3 and the second barrier layer 5 are able to shield the moisture that permeates the first resin base 1 and the second resin base 7 from the outside. Thus, the permeation of moisture vapor to the hologram layer 4 is suppressed, and deterioration of the hologram layer 4 can be prevented.

Further, the chemical resistance of the first resin base 1 and the second resin base 7 is significantly lower than that of glass, although the degree of chemical resistance varies depending on the type of the resin material. Therefore, the first resin base 1 and the second resin base 7 have solvent resistance and hologram material resistance lower than that of glass.

When the first resin base 1 and the second resin base 7 are in contact with the hologram layer 4, a hologram agent, which is a component of the hologram layer 4, tends to permeate through the first resin base 1 and the second resin base 7, or the hologram agent tends to accumulate inside the first resin base 1 and the second resin base 7. When the first resin base 1 and the second resin base 7 are exposed to the hologram agent, the first resin base 1 and the second resin base 7 are deteriorated, and the field of view (FOV) and the definition tend to be lowered.

However, according to the configuration of the present embodiment, the first barrier layer 3 and the second barrier layer 5 are provided in each spacing between the first resin base 1 and the hologram layer 4 and each spacing between the second resin base 7 and the hologram layer 4. With such a configuration, by suppressing permeation of the hologram agent into the first resin base 1 and the second resin base 7, deterioration of the first resin base 1 and the second resin base 7 can also be prevented.

### [Hard Coat Layer]

In the light guide plate for image display of the present embodiment, a hard coat layer may be provided on one surface or both surfaces of the resin base for the purpose of increasing the pencil hardness of the surface of the resin base or reducing the surface roughness Sa of the barrier layer.

It is preferable that the hard coat layer be formed of the curable resin composition. The curable resin composition is not particularly limited. However, it is preferable that the curable resin composition be cured by irradiation with energy luminous flux such as electron beams, radiation or ultraviolet light, or cured by heating. From the viewpoint of molding time and productivity, ultraviolet-curable resin composition is more preferable.

Examples of the curable resins constituting the curable resin composition include acrylate compounds, urethane acrylate compounds, epoxy acrylate compounds, carboxyl group-modified epoxy acrylate compounds, polyester acrylate compounds, copolymer acrylates, alicyclic epoxy resins, glycidyl ether epoxy resins, vinyl ether compounds, oxetane compounds, and the like. The curable resins may be used singly or in combination of two or more.

From the viewpoint of imparting excellent surface hardness to the hard coat layer, among the curable resins, the following are preferable: radically polymerizable curable compounds such as polyfunctional acrylate compounds, polyfunctional urethane acrylate compounds, or polyfunctional epoxy acrylate compounds, or thermally polymerizable curable compounds such as alkoxysilanes or alkylalkoxysilanes.

The curable resin composition which forms the hard coat layer may include a leveling agent as a surface adjustment component. Examples of the leveling agent include fluorine-based leveling agents, silicone-based leveling agents, and acryl-based leveling agents. Among the leveling agents, an acryl-based leveling agent is preferable since excellent adhesiveness can be ensured when the barrier layer is laminated on the surface of the hard coat layer.

A photopolymerization initiator is used when the curable resin composition is cured with ultraviolet light. Examples of the photopolymerization initiator include benzyl, benzophenone, derivatives of benzophenone, thioxanthones, benzyldimethylketals, α-hydroxyalkylphenones, hydroxyketones, aminoalkylphenones, and acylphosphine oxides. The amount of the photopolymerization initiator added is usually in a range of 0.1 to 8 parts by mass with respect to 100 parts by mass of the curable resin composition.

The curable resin composition which forms the hard coat layer may include a refractive index adjustment component. Examples of the refractive index adjustment component include fine particles of a refractive index adjustment component such as fine particles of a high refractive index metal compound such as zinc oxide, zirconium oxide or titanium oxide, or fine particles of a low refractive index metal compound such as magnesium fluoride. Here, the sizes of the fine particles of the refractive index adjustment component are in a range of 5 to 50 nm, and thus the transparency and total ray transmittance of the hard coat layer are not impaired. As a result, the configuration is preferable. Further, the fine particles of the refractive index adjustment component may be mixed in advance with the curable resin composition, and then the mixture thereof may be mixed with the curable resin composition which forms the hard coat layer. In such a manner, the fine particles of the refractive index adjustment component may be included. Furthermore, in a state where the fine particles of the refractive index adjustment component may be mixed in advance with the curable resin composition, the mixture thereof may be set as the curable resin composition which forms the hard coat layer. As the mixture of fine particles of the refractive index adjustment component and the curable resin composition mixed in advance, there are commercially available products. Examples of such commercially available products include lyodulas TYZ, lyodulas TYT, and lyodulas TYM (all manufactured by Toyochem).

Examples of the curable resin composition which forms the hard coat layer may include, in addition to the components described above, lubricants such as silicone-based compounds, fluorine-based compounds, or mixed compounds thereof, antioxidants, ultraviolet absorbers, antistatic agents, flame retardants such as silicone compounds, fillers, additives such as glass fibers and silica. The additives can be used singly or in combination of two or more.

Although the thickness of the hard coat layer is not particularly limited, the thickness is preferably 1 to 20 µm. When the thickness of the hard coat layer is 1 µm or greater, sufficient hardness can be imparted to the surface of the resin base. Further, when the thickness of the hard coat layer is 20 µm or less, it is possible to further ensure moldability and cuttability of the resin base. Furthermore, the configuration is also preferable in that curing shrinkage of the hard coat layer is further suppressed, and warping and undulation of the resin base are not caused.

Assuming that the refractive index of the resin base is na, the refractive index nb of the hard coat layer is preferably in a range of na ± 0.20, more preferably in a range of na ± 0.15, and yet more preferably in a range of na ± 0.10. When the refractive index nb of the hard coat layer is in a range of na±0.20, the luminance value of the light guide plate for image display 8 is improved, and color unevenness can be further prevented.

Examples of the method of forming the hard coat layer include a method of forming and laminating the hard coat layer on the surface of the resin base by coating the surface of the resin base with a coating of a curable resin composition and then forming a cured film thereon. However, the present invention is not limited to this method.

A known method is used as a lamination method with the resin base. Examples of the known method include a dip coating method, a natural coating method, a reverse coating method, a comma coating method, a roll coating method, a spin coating method, a wire bar method, an extrusion method, a curtain coating method, a spray coating method, and a gravure coating method. In addition, for example, a method in which the hard coat layer is laminated on the resin base using a transfer sheet having the hard coat layer formed on a release layer may be adopted.

For the purpose of improving the adhesiveness between the hard coat layer and the resin base, a base film (primer layer) may be provided in advance on the surface of the resin base.

### <Method of Manufacturing Light Guide plate for Image Display>

As an example of the method of manufacturing the light guide plate for image display of the present embodiment, a method of manufacturing the light guide plate for image display 8 shown in FIG. 1 will be described.

The first resin base 1 and the second resin base 7 are provided ([base provision step]), and the first barrier layer 3 and the second barrier layer 5 are respectively formed through the first anchor coat layer 2 and the second anchor coat layer 6 on surfaces of the first resin base 1 and the second resin base 7 ([barrier layer formation step]). As a method of manufacturing the first barrier layer 3 and the second barrier layer 5, an appropriate manufacturing method is selected in accordance with the materials of the first barrier layer 3 and the second barrier layer 5.

For example, a photosensitive material for forming a hologram is applied to the surface of the first barrier layer 3 in the first resin base 1 on which the first barrier layer 3 is formed. At this time, the transparent seal layer having the same thickness as the hologram layer 4 may be provided on an outer peripheral portion of the first barrier layer 3. The seal layer seals the outer peripheral portion of the hologram layer 4 after the hologram layer 4 is formed of the photosensitive material. The seal layer consists of a transparent material such as epoxy resin, silicone resin or ene-thiol resin.

Thereafter, the second resin base 7 on which the second barrier layer 5 is formed is placed on the photosensitive material in a state where the second barrier layer 5 is directed toward the photosensitive material ([light guide plate production step]).

However, the above-mentioned manufacturing sequence is an example. For example, after the photosensitive material is applied to the second resin base 7 on which the second barrier layer 5 is formed, the first resin base 1 on which the first barrier layer 3 is formed may be placed on the hologram layer 4.

Thereafter, the first resin base 1, the first anchor coat layer 2, the first barrier layer 3, the hologram layer 4, the second barrier layer 5, the second anchor coat layer 6, and the second resin base 7 are bonded together by vacuum pressing. Thus, it is possible to obtain the light guide plate for image display 8.

Thereafter, interference fringes corresponding to the diffraction pattern are formed on the photosensitive material, and a diffraction grating is formed in the photosensitive material.

### <<Second Embodiment>>

In a light guide plate for image display according to a second embodiment of the present invention, the laminate, which is provided with the resin base, the anchor coat layer, and the barrier layer in this order, and the hologram layer are disposed in this order, a thickness of the barrier layer is 150 nm or less, a total thickness of the anchor coat layer and the barrier layer is 300 nm or less, and a tan δ peak temperature in viscoelasticity measurement of the anchor coat layer is 80°C or less.

When the thickness of the barrier layer is 150 nm or less, the residual stress of the barrier layer is prevented from becoming excessively large. Thus, cracks can be prevented from occurring in the barrier layer.

Further, when the total thickness of the anchor coat layer and the barrier layer is 300 nm or less, excessive deformation of the barrier layer due to residual stress can be prevented.

Furthermore, when the tan δ peak temperature in the viscoelasticity measurement of the anchor coat layer is 80°C or less, the resin base may expand in a moist heat environment. Even in such a case, the anchor coat layer follows the resin base. Thus, cracks are less likely to occur.

Therefore, by providing the above-mentioned configuration, it is possible to prevent cracks and deformation due to residual stress in the barrier layer, and cracks due to expansion of the resin base in a moist heat environment. Therefore, the barrier property is improved, and deterioration of the hologram layer can be suppressed.

In the light guide plate for image display of the present embodiment, the resin base may include one or more resins selected from the group consisting of poly(meth)acryl-based resin, epoxy resin, cyclic polyolefin-based resin, and polycarbonate-based resin.

In the light guide plate for image display of the present embodiment, the barrier layer may include an inorganic material.

In the light guide plate for image display of the present embodiment, the barrier layer may include one or more inorganic materials selected from the group consisting of silicon oxide, silicon oxynitride, diamond-like carbon, and aluminum oxide.

In the light guide plate for image display of the present embodiment, the anchor coat layer may include one or more resins selected from the group consisting of acryl-based resins, urethane-based resins, and polyester-based resins.

In the light guide plate for image display of the present embodiment, the laminate may have hard coat layers on both surfaces of the resin base.

Hereinafter, the light guide plate for image display according to the present embodiment will be described.

### <Light Guide plate for Image Display>

The outline of the laminated structure of the light guide plate for image display of the present embodiment is the same as that according to the first embodiment.

### [First Laminate 11]

The first laminate 11 includes the first resin base 1, the first anchor coat layer 2, and the first barrier layer 3 in this order. By disposing the first laminate 11 on the surface of the hologram layer 4, the light guide plate for image display 8 is able to suppress deterioration of the hologram layer.

### (Barrier Property)

The moisture vapor permeability of the first laminate 11 is preferably less than 0.1 g/m²/day, more preferably less than 0.08 g/m²/day, yet more preferably less than 0.05 g/m²/day, further preferably less than 0.03 g/m²/day, still further preferably less than 0.01 g/m²/day, and yet further preferably less than 0.005 g/m²/day.

When the moisture vapor permeability of the first laminate 11 is in the above-mentioned range, deterioration of the hologram layer 4 can be further suppressed.

### [First Resin Base 1]

The suitable thickness, total ray transmittance, and material of the first resin base 1 are the same as those according to the first embodiment.

The surface roughness Sa of the first resin base 1 is not particularly limited, but is preferably 10 nm or less, more preferably 8 nm or less, and yet more preferably 6 nm or less, when 0 nm is set as a lower limit. When the surface roughness Sa is 10 nm or less, the surface roughness Sa of the first laminate 11 can be reduced, and the luminance value of the light guide plate for image display 8 is improved.

It should be noted that, in the present specification, the surface roughness Sa is a surface roughness measured using a white interferometer (VertScan, manufactured by Ryoka System Co., Ltd.).

### [First Anchor Coat Layer 2]

The suitable thickness, tan δ peak temperature, total ray transmittance, refractive index, material, and formation method of the first anchor coat layer 2 are the same as those according to the first embodiment.

### [First Barrier Layer 3]

The suitable oxygen permeability, the moisture vapor permeability, the thickness, and the refractive index of the first barrier layer 3 are the same as those according to the first embodiment.

It is preferable that the first barrier layer 3 include an inorganic material. Among the inorganic materials, it is more preferable that the first barrier layer 3 include one or more materials selected from the group consisting of silicon oxide, silicon oxynitride, diamond-like carbon (DLC), and aluminum oxide. Further, from the viewpoint of improving the total ray transmittance and barrier properties, it is more preferable that the first barrier layer 3 include silicon oxide or silicon oxynitride.

When the first barrier layer 3 consists of silicon oxide or silicon oxynitride, the first barrier layer 3 can be formed by a conventionally known method such as a vacuum deposition method, a sputtering method, an ion plating method or a plasma CVD method. Among the methods, the sputtering method is preferable from the viewpoint of obtaining a favorable barrier property and improving the sharpness of the light guide plate for image display 8.

In order to improve the adhesiveness between the first anchor coat layer 2 and the first barrier layer 3, the surface of the first anchor coat layer 2 is subj ected to corona discharge treatment or low-temperature plasma treatment, or is subjected to a surface treatment such as coating with a silane coupling agent or coating with a mixture of saturated polyester and isocyanate.

When the film formation is performed by, for example, a vacuum deposition method, silicon, silicon monoxide, silicon dioxide, silicon oxynitride, or a mixture thereof is used as the evaporation material, and is heated and evaporated by an electron beam, resistance heating, or high-frequency heating method under a vacuum in a range of 1.0×10⁻³ to 2.0×10⁻¹ Pa.

Further, a reactive vapor deposition method performed while oxygen gas and nitrogen gas are supplied can also be adopted.

Furthermore, for example, in the case of forming a film by a sputtering method, silicon, silicon monoxide, silicon dioxide, silicon oxynitride, or a mixture thereof is used as a target, and a film thereof can be formed under a vacuum in a range of 1.0×10⁻² to 5.0×10⁻¹ Pa.

Moreover, a reactive sputtering method that is performed while supplying oxygen gas, nitrogen gas, or argon gas can be employed.

Silicon oxide or silicon oxynitride forming the first barrier layer 3 may have calcium, magnesium, or oxides thereof mixed therein as impurities as long as the content is 10% by mass or less.

The diamond-like carbon (DLC) is an amorphous carbon material generally having a ternary structure of a diamond-like structure, a graphite-like structure, and a polyethylene-like polymer structure including a hydrogen atom in the structure. In the generation of the DLC, there is usually an essentially ternary structure including hydrogen when using ethylene, a hydrocarbon acetylene, or benzene as a carbon source.

The DLC has excellent hardness, lubricity, wear resistance, chemical stability, heat resistance and surface smoothness. Since the DLC forms the above-mentioned dense polymer structure, the DLC also has excellent gas barrier and moisture vapor barrier properties.

When the first barrier layer 3 is formed by DLC, a suitable well-known coating method such as plasma CVD, ion plating, or physical vapor deposition such as ion beam sputtering can be used.

When the first barrier layer 3 consists of aluminum oxide, the first barrier layer 3 may be formed of, for example, only Al₂O₃, or may be formed of a mixture of two or more elements selected from the group consisting of Al, AlO, and Al₂O₃. The atomic number ratio of Al: O in the aluminum oxide layer differs depending on the production conditions of the aluminum oxide layer. The aluminum oxide layer that can be used as the first barrier layer 3 may include a trace amount (up to 3% of all components) of other components as long as the barrier performance is not impaired.

The method of forming the first barrier layer 3 with the aluminum oxide is not particularly limited. For example, as a method for forming the first barrier layer 3, a PVD method (physical vapor deposition method) such as a vacuum deposition method, a sputtering method or an ion plating method, or a CVD method (chemical vapor deposition method) may be used.

For example, in the vacuum deposition method, Al, Al₂O₃, and the like may be used as the vapor deposition source material, and resistance heating, high-frequency induction heating, electron beam heating, and the like may be used as the heating method of the vapor deposition source. In the vacuum deposition method, oxygen, nitrogen, moisture vapor or the like may be adopted as the reactive gas. Alternatively, reactive vapor deposition using means such as ozone addition or ion assist may be used. Further, the film formation surface may be biased. Alternatively, the temperature of the film formation surface may be raised. Alternatively, the film may be cooled. The same applies to other film formation methods such as the PVD method and the CVD method other than the sputtering method and other vacuum deposition methods.

### [Hologram Layer 4]

Suitable materials of the hologram layer 4 are the same as those according to the first embodiment.

### [Second Laminate 12]

The second laminate 12 includes the second barrier layer 5, the second anchor coat layer 6, and the second resin base 7 in this order. Various physical properties of the second laminate 12 may be different from the physical properties of the first laminate 11.

### [Second Barrier Layer 5]

The second barrier layer 5 is laminated on an opposite side of the first barrier layer 3 with the hologram layer 4 interposed therebetween. As the second barrier layer 5, the same configuration as in the description of the first barrier layer 3 is used. However, the thickness, material, and the like of the second barrier layer 5 may be different from those of the first barrier layer 3.

### [Second Anchor Coat Layer 6]

The second anchor coat layer 6 is disposed between the second barrier layer 5 and the second resin base 7. As the second anchor coat layer 6, the same configuration as in the description of the first anchor coat layer 2 is used. However, the thickness, material, and the like of the second anchor coat layer 6 may be different from those of the first anchor coat layer 2.

### [Second Resin Base 7]

The second resin base 7 is laminated on the surface of the second anchor coat layer 6. As the second resin base 7, the same configuration as in the description of the first resin base 1 is used. However, the thickness, material, and the like of the second resin base 7 may be different from those of the first resin base 1. In particular, the second resin base 7 is disposed on the surface of the light guide plate for image display 8 on the external light incident side located opposite to the display image emission side. Therefore, the second resin base 7 may employ a material of which the surface hardness is higher than that of the first resin base 1.

### [Light Guide plate for Image Display 8]

In the light guide plate for image display 8, the first anchor coat layer 2 and the first barrier layer 3 are disposed between the first resin base 1 and the hologram layer 4 and the second barrier layer 5 and the second anchor coat layer 6 are disposed between the second resin base 7 and the hologram layer 4.

The gas outside the light guide plate for image display 8 permeates the first resin base 1 and the second resin base 7 to some extent, or accumulates inside. At this time, moisture is particularly likely to accumulate in the first resin base 1 and the second resin base 7.

However, according to the configuration of the present embodiment, the first barrier layer 3 and the second barrier layer 5 are able to shield the moisture that permeates the first resin base 1 and the second resin base 7 from the outside. Thus, the permeation of moisture vapor to the hologram layer 4 is suppressed, and deterioration of the hologram layer 4 can be prevented.

Further, the chemical resistance of the first resin base 1 and the second resin base 7 is significantly lower than that of glass, although the degree of chemical resistance varies depending on the type of the resin material. Therefore, the first resin base 1 and the second resin base 7 have solvent resistance and hologram material resistance lower than that of glass.

When the first resin base 1 and the second resin base 7 are in contact with the hologram layer 4, a hologram agent, which is a component of the hologram layer 4, tends to permeate through the first resin base 1 and the second resin base 7, or the hologram agent tends to accumulate inside the first resin base 1 and the second resin base 7. When the first resin base 1 and the second resin base 7 are exposed to the hologram agent, the first resin base 1 and the second resin base 7 are deteriorated, and the field of view (FOV) and the definition tend to be lowered.

However, according to the configuration of the present embodiment, the first barrier layer 3 and the second barrier layer 5 are provided in each spacing between the first resin base 1 and the hologram layer 4 and each spacing between the second resin base 7 and the hologram layer 4. With such a configuration, by suppressing permeation of the hologram agent into the first resin base 1 and the second resin base 7, deterioration of the first resin base 1 and the second resin base 7 can also be prevented.

### [Hard Coat Layer]

In the light guide plate for image display of the present embodiment, a hard coat layer may be provided on one surface or both surfaces of the resin base for the purpose of increasing the pencil hardness of the surface of the resin base or reducing the surface roughness Sa of the barrier layer.

A suitable material, thickness, refractive index, and method of forming the hard coat layer are the same as those of the hard coat layer according to the first embodiment.

### <Method of Manufacturing Light Guide plate for Image Display>

The method of manufacturing the light guide plate for image display of the present embodiment is the same as that according to the first embodiment.

### <<Third Embodiment>>

Alight guide plate for image display according to a third embodiment of the present invention includes: a laminate provided with a resin base, an anchor coat layer, and a barrier layer in this order; and a hologram layer. Assuming that a thickness of the anchor coat layer is A nm and a tan δ peak temperature in the viscoelasticity measurement of the anchor coat layer is B°C, A/B is 3 or less.

The light guide plate for image display according to the present embodiment is able to suppress deterioration of the hologram layer by providing the above-mentioned configuration, and deformation due to residual stress of the barrier layer is less likely to occur in a moist heat environment. Thus, optical characteristics are less likely to change even in a moist heat environment.

In the light guide plate for image display of the present embodiment, the anchor coat layer may have a thickness of 1 nm or greater and 200 nm or less.

In the light guide plate for image display of the present embodiment, the anchor coat layer may have a tan δ peak temperature of 10°C or higher and 80°C or lower in viscoelasticity measurement.

In the light guide plate for image display of the present embodiment, the resin base may include one or more resins selected from the group consisting of poly(meth)acryl-based resin, epoxy resin, cyclic polyolefin-based resin, and polycarbonate-based resin.

In the light guide plate for image display of the present embodiment, the anchor coat layer may include one or more resins selected from the group consisting of acryl-based resins, urethane-based resins, and polyester-based resins.

In the light guide plate for image display of the present embodiment, the barrier layer may include an inorganic material.

In the light guide plate for image display of the present embodiment, the barrier layer may include one or more inorganic materials selected from the group consisting of silicon oxide, silicon oxynitride, diamond-like carbon, and aluminum oxide.

In the light guide plate for image display of the present embodiment, the laminate may have hard coat layers on both surfaces of the resin base.

In the light guide plate for image display of the present embodiment, the moisture vapor permeability of the laminate may be less than 0.01 g/m²/day.

Hereinafter, the light guide plate for image display according to the present embodiment will be described.

### <Light Guide plate for Image Display>

The outline of the laminated structure of the light guide plate for image display of the present embodiment is the same as that according to the first embodiment.

### [First Laminate 11]

The first laminate 11 includes the first resin base 1, the first anchor coat layer 2, and the first barrier layer 3 in this order. By disposing the first laminate 11 on the surface of the hologram layer 4, the light guide plate for image display 8 is able to suppress deterioration of the hologram layer.

A suitable moisture vapor permeability of the first laminate 11 is the same as that according to the first embodiment.

### (Optical Characteristics)

The haze of the first laminate 11 is preferably less than 0.1%, more preferably less than 0.08%, yet more preferably less than 0.06%, and most preferably less than 0.05%. When the haze of the first laminate 11 is less than 0.1%, the luminance value of the light guide plate for image display 8 is improved.

Further, the haze after storing the first laminate 11 at 40°C 90% for 10 days is preferably less than 2%, more preferably less than 1%, yet more preferably less than 0.5%, most preferably less than 0.2%, and especially preferably less than 0.1%.

### [First Resin Base 1]

The suitable thickness, total ray transmittance, and material of the first resin base 1 are the same as those according to the first embodiment.

### [First Anchor Coat Layer 2]

The suitable thickness, tan δ peak temperature, total ray transmittance, refractive index, material, and formation method of the first anchor coat layer 2 are the same as those according to the first embodiment.

When the tan δ peak temperature of the first anchor coat layer 2 is lower than the ambient temperature, an elastic modulus of the first anchor coat layer 2 decreases when the light guide plate for image display 8 is placed in a moist heat environment. When the first anchor coat layer 2 is soft, the residual stress of the first barrier layer 3 is less likely to be suppressed. Therefore, the first barrier layer 3 deforms and the haze tends to increase. Even when the first anchor coat layer 2 is thick, the first anchor coat layer 2 is likely to be greatly deformed by the residual stress of the first barrier layer 3 in a moist heat environment, and the haze is likely to increase.

On the other hand, when the tan δ peak temperature of the first anchor coat layer 2 is higher than the ambient temperature, the elastic modulus is less likely to decrease even in a moist heat environment. Therefore, deformation due to residual stress in the first barrier layer 3 is less likely to occur, and an increase in haze is suppressed. Even when the first anchor coat layer 2 is thin, deformation due to the residual stress of the first barrier layer 3 is less likely to occur. Therefore, an increase in haze is suppressed.

From the above-mentioned viewpoint, when the thickness of the first anchor coat layer 2 is A [nm] and the tan δ peak temperature of the first anchor coat layer 2 in the viscoelasticity measurement is B [°C], A/B is 3 or less, preferably 2.5 or less, and more preferably 2 or less.

### [First Barrier Layer 3]

The suitable oxygen permeability, the moisture vapor permeability, the thickness, and the refractive index of the first barrier layer 3 are the same as those according to the first embodiment.

Further, the suitable material and formation method of the first barrier layer 3 are the same as those according to the second embodiment.

### [Hologram Layer 4]

Suitable materials of the hologram layer 4 are the same as those according to the first embodiment.

### [Second Laminate 12]

The second laminate 12 includes the second barrier layer 5, the second anchor coat layer 6, and the second resin base 7 in this order. Various physical properties of the second laminate 12 may be different from the physical properties of the first laminate 11.

### [Second Barrier Layer 5]

The second barrier layer 5 is laminated on an opposite side of the first barrier layer 3 with the hologram layer 4 interposed therebetween. As the second barrier layer 5, the same configuration as in the description of the first barrier layer 3 is used. However, the thickness, material, and the like of the second barrier layer 5 may be different from those of the first barrier layer 3.

### [Second Anchor Coat Layer 6]

The second anchor coat layer 6 is disposed between the second barrier layer 5 and the second resin base 7. As the second anchor coat layer 6, the same configuration as in the description of the first anchor coat layer 2 is used. However, the thickness, material, and the like of the second anchor coat layer 6 may be different from those of the first anchor coat layer 2.

### [Second Resin Base 7]

The second resin base 7 is laminated on the surface of the second anchor coat layer 6. As the second resin base 7, the same configuration as in the description of the first resin base 1 is used. However, the thickness, material, and the like of the second resin base 7 may be different from those of the first resin base 1. In particular, the second resin base 7 is disposed on the surface of the light guide plate for image display 8 on the external light incident side located opposite to the display image emission side. Therefore, the second resin base 7 may employ a material of which the surface hardness is higher than that of the first resin base 1.

### [Light Guide plate for Image Display 8]

In the light guide plate for image display 8, the first anchor coat layer 2 and the first barrier layer 3 are disposed between the first resin base 1 and the hologram layer 4 and the second barrier layer 5 and the second anchor coat layer 6 are disposed between the second resin base 7 and the hologram layer 4.

The gas outside the light guide plate for image display 8 permeates the first resin base 1 and the second resin base 7 to some extent, or accumulates inside. At this time, moisture is particularly likely to accumulate in the first resin base 1 and the second resin base 7.

However, according to the configuration of the present embodiment, the first barrier layer 3 and the second barrier layer 5 are able to shield the moisture that permeates the first resin base 1 and the second resin base 7 from the outside. Thus, the permeation of moisture vapor to the hologram layer 4 is suppressed, and deterioration of the hologram layer 4 can be prevented.

Further, the chemical resistance of the first resin base 1 and the second resin base 7 is significantly lower than that of glass, although the degree of chemical resistance varies depending on the type of the resin material. Therefore, the first resin base 1 and the second resin base 7 have solvent resistance and hologram material resistance lower than that of glass.

When the first resin base 1 and the second resin base 7 are in contact with the hologram layer 4, a hologram agent, which is a component of the hologram layer 4, tends to permeate through the first resin base 1 and the second resin base 7, or the hologram agent tends to accumulate inside the first resin base 1 and the second resin base 7. When the first resin base 1 and the second resin base 7 are exposed to the hologram agent, the first resin base 1 and the second resin base 7 are deteriorated, and the field of view (FOV) and the definition tend to be lowered.

However, according to the configuration of the present embodiment, the first barrier layer 3 and the second barrier layer 5 are provided in each spacing between the first resin base 1 and the hologram layer 4 and each spacing between the second resin base 7 and the hologram layer 4. With such a configuration, by suppressing permeation of the hologram agent into the first resin base 1 and the second resin base 7, deterioration of the first resin base 1 and the second resin base 7 can also be prevented.

### [Hard Coat Layer]

In the light guide plate for image display of the present embodiment, a hard coat layer may be provided on one surface or both surfaces of the resin base for the purpose of increasing the pencil hardness of the surface of the resin base or reducing the surface roughness Sa of the barrier layer.

A suitable material, thickness, refractive index, and method of forming the hard coat layer are the same as those of the hard coat layer according to the first embodiment.

### <Method of Manufacturing Light Guide plate for Image Display>

The method of manufacturing the light guide plate for image display of the present embodiment is the same as that according to the first embodiment.

### <<Fourth Embodiment>>

Alight guide plate for image display according to a fourth embodiment of the present invention includes: a laminate that is provided with a resin base, an anchor coat layer, and a barrier layer in this order; and a hologram layer, in which the anchor coat layer consists of a binder resin having a hydroxyl group and a resin composition that contains an isocyanate compound, and a molar ratio NCO/OH of the isocyanate groups (NCO) of the isocyanate compound to the hydroxyl groups (OH) of the binder resin is 0.8 or greater.

In the light guide plate for image display of the present embodiment, the anchor coat layer has the above-mentioned characteristics. Therefore, deterioration of the hologram layer can be suppressed and favorable solvent resistance can be obtained.

In the light guide plate for image display of the present embodiment, the resin base may include at least one resin selected from the group consisting of poly(meth)acryl-based resin, epoxy resin, cyclic polyolefin-based resin, and polycarbonate-based resin.

In the light guide plate for image display of the present embodiment, the anchor coat layer may include, as the binder resin, at least one resin selected from the group consisting of acryl-based resin, urethane-based resin, and polyester-based resin.

In the light guide plate for image display of the present embodiment, the barrier layer may include an inorganic material.

In the light guide plate for image display of the present embodiment, the barrier layer may include at least one inorganic material selected from the group consisting of silicon oxide, silicon oxynitride, diamond-like carbon, and aluminum oxide.

In the light guide plate for image display of the present embodiment, the barrier layer includes silicon oxynitride as a main component, and the nitrogen element formulation in the barrier layer determined by X-ray photoelectron spectroscopy (XPS) may be 7 atm% or greater.

In the light guide plate for image display of the present embodiment, the laminate may have hard coat layers on both surfaces of the resin base.

In the light guide plate for image display of the present embodiment, the moisture vapor permeability of the laminate may be less than 0.01 g/m²/day.

Hereinafter, the light guide plate for image display according to the present embodiment will be described.

### <Light Guide plate for Image Display>

The outline of the laminated structure of the light guide plate for image display of the present embodiment is the same as that according to the first embodiment.

### [First Laminate 11]

The first laminate 11 includes the first resin base 1, the first anchor coat layer 2, and the first barrier layer 3 in this order. By disposing the first laminate 11 on the surface of the hologram layer 4, the light guide plate for image display 8 is able to suppress deterioration of the hologram layer and obtain favorable solvent resistance.

It should be noted that the "solvent resistance" in the present invention means that the first barrier layer 3 does not peel from the first resin base 1 when a solvent such as isopropyl alcohol is dropped on the surface on the first barrier layer 3 side and wiped off. More specifically, the solvent resistance is evaluated by the method described in the examples.

The suitable total ray transmittance and moisture vapor permeability of the first laminate 11 are the same as those according to the first embodiment.

### [First Resin Base 1]

The suitable thickness, total ray transmittance, and material of the first resin base 1 are the same as those according to the first embodiment.

### [First Anchor Coat Layer 2]

The suitable thickness, total ray transmittance, refractive index, and formation method of the first anchor coat layer 2 are the same as those according to the first embodiment.

The first anchor coat layer 2 consists of a resin composition including a binder resin having a hydroxyl group and an isocyanate compound. The solvent resistance is improved since the binder resin is cross-linked by the isocyanate compound.

The binder resin having a hydroxyl group is not particularly limited, but includes acryl-based resins, urethane-based resins, polycarbonate-based resins, polyether-based resins, and polyester-based resins. It is preferable that the binder resin be at least one resin selected from the group consisting of acryl-based resins, urethane-based resins, and polyester-based resins. It is preferable that the binder resin be a polyol having two or more hydroxyl groups in one molecule.

From the viewpoint of increasing the cross-link density, the hydroxyl value of the binder resin is preferably in a range of 0.1 to 300 mgKOH/g, more preferably in a range of 1 to 200 mgKOH/g, yet more preferably in a range of 5 to 150 mgKOH/g.

It is preferable that the isocyanate compound be an aromatic or aliphatic diisocyanate or a trivalent or higher polyisocyanate. Examples of isocyanate compounds include tetramethylene diisocyanate, hexamethylene diisocyanate, toluene diisocyanate, diphenylmethane diisocyanate, hydrogenated diphenylmethane diisocyanate, xylylene diisocyanate, hydrogenated xylylene diisocyanate, isophorone diisocyanate, cyclohexane diisocyanate, dicyclohexyl diisocyanate, or trimers thereof.

The molar ratio NCO/OH of the isocyanate groups (NCO) of the isocyanate compound to the hydroxyl groups (OH) of the binder resin is 0.8 or greater, preferably 0.9 or greater, and more preferably 1 or greater. Although the upper limit is not particularly limited, it is preferable that the upper limit be 10 or less.

When the isocyanate group of the isocyanate compound includes more isocyanate groups than the hydroxyl groups of the binder resin, a part of the isocyanate compound also reacts with the functional groups on the surface of the first resin base 1 to form bonds. Thus, adhesiveness between the first resin base and the first anchor coat layer 2 is improved.

The resin composition constituting the first anchor coat layer 2 may include, as additives, a resin other than the binder resin having a hydroxyl group, a silane coupling agent, a sensitizer, a cross-linker other than an isocyanate compound, an ultraviolet absorber, a polymerization inhibitor, a surfactant agent, a filler, a release agent, and other thermoplastic resins. The additives can be used singly or in combination of two or more.

Examples of the resins other than the binder resin having a hydroxyl group include fluorine-based resins, polyethersulfone-based resins, silicone-based resins, cycloolefin-based resins, thermoplastic polyimide-based resins, polyamide-based resins, polyamideimide-based resins, polyarylate-based resins, polysulfone-based resins, polyetherimide-based resins, polyetheretherketone-based resins, polyether silicone-based resins, and polyphenylene sulfide-based resins.

Examples of the cross-linkers other than the above-mentioned isocyanate compounds include peroxide-based cross-linkers, epoxy-based cross-linkers, and imine-based cross-linkers.

### [First Barrier Layer 3]

The suitable oxygen permeability, the moisture vapor permeability, the thickness, and the refractive index of the first barrier layer 3 are the same as those according to the first embodiment.

Further, the suitable material and formation method of the first barrier layer 3 are the same as those according to the second embodiment.

From the viewpoint of the barrier properties and the solvent resistance, it is preferable that the first barrier layer 3 include silicon oxynitride as a main component.

When the first barrier layer 3 includes silicon oxynitride, the nitrogen element formulation in the first barrier layer 3 determined by X-ray photoelectron spectroscopy (XPS) is preferably 7 atm% or greater, more preferably 8 atm% or greater, yet more preferably 9 atm% or greater, and most preferably 10 atm% or greater. When the nitrogen element formulation is 7 atm% or greater, the first barrier layer 3 has favorable solvent resistance.

From the viewpoint of optical characteristics, the nitrogen element formulation in the first barrier layer 3 is preferably 40 atm% or less, more preferably 30 atm% or less, and yet more preferably 25 atm% or less.

The nitrogen element formulation in the first barrier layer 3 can be adjusted by the nitrogen flow rate, electric power, and film formation pressure during film formation.

In particular, in order to make the nitrogen element formulation of 7 atm% or greater, the ratio O₂/N₂ between the oxygen flow rate O₂ [sccm] and the nitrogen flow rate N₂ [sccm] is preferably in a range of 0.10 to 1.5, more preferably in a range of 0.12 to 1.0, and yet more preferably in a range of 0.15 to 1.0.

Further, the electric power is preferably in a range of 1000 to 2000 W. Since the O₂/N₂ and the electric power affect each other, the electric power is preferably 1000 W or greater and less than 1500 W when the O₂/N₂ is 0.10 or greater and less than 0.15, and the electric power is preferably 1500 W or greater and 2000 W or less when the O₂/N₂ is 0.15 or greater and 1.5 W or less.

Furthermore, the film formation pressure is preferably 1.0×10⁻² to 2.0×10⁻¹ Pa, and more preferably 5.0×10⁻² to 1.5×10⁻¹ Pa.

### [Hologram Layer 4]

Suitable materials of the hologram layer 4 are the same as those according to the first embodiment.

### [Second Laminate 12]

The second laminate 12 includes the second barrier layer 5, the second anchor coat layer 6, and the second resin base 7 in this order. Various physical properties of the second laminate 12 may be different from the physical properties of the first laminate 11.

### [Second Barrier Layer 5]

The second barrier layer 5 is laminated on an opposite side of the first barrier layer 3 with the hologram layer 4 interposed therebetween. As the second barrier layer 5, the same configuration as in the description of the first barrier layer 3 is used. However, the thickness, material, and the like of the second barrier layer 5 may be different from those of the first barrier layer 3.

### [Second Anchor Coat Layer 6]

The second anchor coat layer 6 is disposed between the second barrier layer 5 and the second resin base 7. As the second anchor coat layer 6, the same configuration as in the description of the first anchor coat layer 2 is used. However, the thickness, material, and the like of the second anchor coat layer 6 may be different from those of the first anchor coat layer 2.

### [Second Resin Base 7]

The second resin base 7 is laminated on the surface of the second anchor coat layer 6. As the second resin base 7, the same configuration as in the description of the first resin base 1 is used. However, the thickness, material, and the like of the second resin base 7 may be different from those of the first resin base 1. In particular, the second resin base 7 is disposed on the surface of the light guide plate for image display 8 on the external light incident side located opposite to the display image emission side. Therefore, the second resin base 7 may employ a material of which the surface hardness is higher than that of the first resin base 1.

### [Light Guide plate for Image Display 8]

In the light guide plate for image display 8, the first anchor coat layer 2 and the first barrier layer 3 are disposed between the first resin base 1 and the hologram layer 4 and the second barrier layer 5 and the second anchor coat layer 6 are disposed between the second resin base 7 and the hologram layer 4.

The gas outside the light guide plate for image display 8 permeates the first resin base 1 and the second resin base 7 to some extent, or accumulates inside. At this time, moisture is particularly likely to accumulate in the first resin base 1 and the second resin base 7.

However, according to the configuration of the present embodiment, the first barrier layer 3 and the second barrier layer 5 are able to shield the moisture that permeates the first resin base 1 and the second resin base 7 from the outside. Thus, the permeation of moisture vapor to the hologram layer 4 is suppressed, and deterioration of the hologram layer 4 can be prevented.

Further, the chemical resistance of the first resin base 1 and the second resin base 7 is significantly lower than that of glass, although the degree of chemical resistance varies depending on the type of the resin material. Therefore, the first resin base 1 and the second resin base 7 have solvent resistance and hologram material resistance lower than that of glass.

When the first resin base 1 and the second resin base 7 are in contact with the hologram layer 4, a hologram agent, which is a component of the hologram layer 4, tends to permeate through the first resin base 1 and the second resin base 7, or the hologram agent tends to accumulate inside the first resin base 1 and the second resin base 7. When the first resin base 1 and the second resin base 7 are exposed to the hologram agent, the first resin base 1 and the second resin base 7 are deteriorated, and the field of view (FOV) and the definition tend to be lowered.

However, according to the configuration of the present embodiment, the first barrier layer 3 and the second barrier layer 5 are provided in each spacing between the first resin base 1 and the hologram layer 4 and each spacing between the second resin base 7 and the hologram layer 4. With such a configuration, by suppressing permeation of the hologram agent into the first resin base 1 and the second resin base 7, deterioration of the first resin base 1 and the second resin base 7 can also be prevented.

### [Hard Coat Layer]

In the light guide plate for image display of the present embodiment, a hard coat layer may be provided on one surface or both surfaces of the resin base for the purpose of increasing the pencil hardness of the surface of the resin base or reducing the surface roughness Sa of the barrier layer.

A suitable material, thickness, refractive index, and method of forming the hard coat layer are the same as those of the hard coat layer according to the first embodiment.

### <Method of Manufacturing Light Guide plate for Image Display>

The method of manufacturing the light guide plate for image display of the present embodiment is the same as that according to the first embodiment.

### <<Fifth Embodiment>>

In a light guide plate for image display according to a fifth embodiment of the present invention, a laminate, which is provided with a resin base and a protective layer in this order, and a hologram layer are disposed in this order. A surface roughness Sa is less than 5.5 nm on a side of the protective layer in contact with the hologram layer.

In the light guide plate for image display of the present embodiment, deterioration of the hologram layer can be suppressed by providing the protective layer with the above-mentioned configuration.

In the light guide plate for image display of the present embodiment, the resin base may include one or more resins selected from the group consisting of acryl-based resins, polycarbonate-based resins, polyester-based resins, and cycloolefin-based resins.

In the light guide plate for image display of the present embodiment, the resin base may include a resin layer (A) including a hard resin (a) having a hardness disperse phase in a matrix.

In the light guide plate for image display of the present embodiment, the resin base may be formed by laminating the resin layer (A) and the resin layer (B) having a main component different from the resin layer (A).

In the light guide plate for image display of the present embodiment, the resin base may have a thickness in a range of 0.05 to 5 mm.

In the light guide plate for image display of the present embodiment, the surface of the resin base opposite to the surface facing the protective layer may have a pencil hardness of 3H or greater.

In the light guide plate for image display of the present embodiment, the laminate may have an adhesive layer between the resin base and the protective layer.

Hereinafter, the light guide plate for image display according to the present embodiment will be described.

### <Light Guide plate for Image Display>

The light guide plate for image display of the present embodiment has at least a laminate including the resin base and the protective layer, and the hologram layer. The resin base, the protective layer, and the hologram layer are disposed in this order in the thickness direction. The resin base and the protective layer may be disposed on at least one surface of the hologram layer, but may be disposed on both surfaces of the hologram layer. When the laminates are disposed on both surfaces of the hologram layer, the laminate disposed on one surface of the hologram layer is referred to as a first laminate, and the laminate disposed on the other surface of the hologram layer is referred to as a second laminate. In such a case, the hologram layer is interposed between the first protective layer of the first laminate and the second protective layer of the second laminate, the first resin base is laminated on the other surface of the first protective layer, and the second resin base is laminated on the other surface of the second protective layer. In the present embodiment, the first laminate and the second laminate may be collectively referred to as simply the "laminate" hereinafter.
Hereinafter, the first resin base and the second resin base may be collectively referred to as simply the "resin base". Further, the first protective layer and the second protective layer may be collectively referred to as "protective layer" hereinafter.

One or more transparent layers may be disposed between the resin base and the protective layer and between the protective layer and the hologram layer. Examples of the transparent layer include an adhesive layer and a hard coat layer.

Further, the protective layer and the transparent layer may be disposed on one surface of the resin base, but may be disposed on both surfaces of the resin base. That is, the protective layer, the resin base, the protective layer and the hologram layer may be configured to be disposed in this order in the thickness direction. Alternatively, the protective layer, the transparent layer, the resin base, the transparent layer, the protective layer, and the hologram layer may be configured to be disposed in this order in the thickness direction.

### [First Laminate 11]

The first laminate 11 is provided with the first resin base 1 and the first protective layer 3 in this order. The first laminate 11 may have the first adhesive layer 2 between the first resin base 1 and the first protective layer 3. By disposing the first laminate 11 on the surface of the hologram layer 4, the light guide plate for image display 8 is able to suppress deterioration of the hologram layer.

### (Barrier Property)

The moisture vapor permeability of the first laminate 11 is preferably less than 1 g/m²/day, more preferably less than 0.5 g/m²/day, yet more preferably less than 0.3 g/m²/day, further preferably less than 0.1 g/m²/day, still further preferably less than 0.08 g/m²/day, and yet further preferably less than 0.05 g/m²/day.

When the moisture vapor permeability of the first laminate 11 is in the above-mentioned range, deterioration of the hologram layer 4 can be further suppressed.

### [First Resin Base 1]

Although a thickness of the first resin base 1 is not particularly limited, the thickness is preferably in a range of 0.05 to 5 mm.

Although a lower limit of the thickness of the first resin base 1 is not particularly limited, the lower limit is preferably 0.1 mm or greater, and more preferably 0.2 mm or greater, from the viewpoint of improving scratch resistance.

Although the upper limit of the thickness of the first resin base 1 is not particularly limited, the upper limit is preferably 3 mm or less, and more preferably 2 mm or less, from the viewpoint of improving the moldability and the total ray transmittance.

The pencil hardness of the surface of the first resin base 1 opposite to the side facing the first protective layer 3 (hereinafter also simply referred to as "the pencil hardness of the surface of the first resin base 1") is not particularly limited. However, the pencil hardness is preferably 3H or greater, more preferably 4H or greater, and yet more preferably 5H or greater. Since the pencil hardness of the surface of the first resin base 1 is high (high hardness), the light guide plate for image display 8 can be provided with excellent scratch resistance.

Further, the surface roughness Sa of the side of the first resin base 1 facing the first protective layer 3 (hereinafter also simply referred to as "surface roughness Sa of the first resin base 1") is not particularly limited, but is preferably less than 5.5 nm. Since the surface roughness Sa of the first resin base 1 is small, the first protective layer 3 described later can be formed more uniformly, and the surface roughness Sa of the first protective layer 3 is smaller. Thereby, the moisture vapor barrier property of the first protective layer 3 is improved, and deterioration of the hologram layer 4 can be suppressed. From this point of view, the surface roughness Sa of the first resin base 1 has a lower limit of 0 nm, and is preferably less than 5.5 nm, more preferably 5.0 nm or less, yet more preferably 4.5 nm or less, further preferably 4.0 nm or less, still further preferably 3.0 nm or less, yet further preferably 2.5 nm or less, even further preferably 2.0 nm or less, and especially preferably 1.5 nm or less.

Although the total ray transmittance of the first resin base 1 is not particularly limited, the total ray transmittance is preferably 80% or greater, and more preferably 90% or greater. When the total ray transmittance of the first resin base 1 is 80% or greater, the luminance value of the light guide plate for image display 8 is improved.

It is preferable that the first resin base 1 include a thermoplastic resin from the viewpoint of improving the optical characteristics, the impact resistance, the scratch resistance, and the moldability.

The thermoplastic resin is not particularly limited as long as the resin can be formed into a film, sheet or plate by melt extrusion. Preferred examples of thermoplastic resins include aromatic polyesters such as polyethylene terephthalate, polyethylene naphthalate, polypropylene terephthalate, polybutylene terephthalate, and poly-1,4-cyclohexylene dimethylene terephthalate; polyester-based resins represented by aliphatic polyesters such as polylactic acid-based polymers; polyolefin-based resins such as polyethylene, polypropylene, and cycloolefin-based resins; polycarbonate-based resins, acryl-based resins, polystyrene-based resins, polyamide-based resins, polyether-based resins, polyurethane-based resins, polyphenylene sulfide-based resins, polyester amide-based resin, polyether ester-based resin, vinyl chloride-based resin, acrylonitrile-styrene copolymer, acrylonitrile-butadiene-styrene copolymer, modified polyphenylene ether-based resin, polyarylate-based resin, polysulfone-based resin, polyetherimide-based resins, polyamideimide-based resins, polyimide-based resins, and copolymers thereof. The thermoplastic resins can be used singly or in combination of two or more. Further, the first resin base 1 may have a configuration in which layers made of two or more materials selected from the group consisting of thermoplastic resins are laminated.

In the present invention, one or more resins selected from the group consisting of acryl-based resins, polycarbonate-based resins, polyester-based resins and cycloolefin-based resins is preferable from the viewpoint of almost no absorption in the visible light range.

Among the resins, the acryl-based resins are preferable from the viewpoint of excellent the transparency, the scratch resistance, and the moldability.

Further, a polycarbonate-based resin is preferable from the viewpoint of having excellent transparency, impact resistance, and moldability.

### (Acryl-Based Resin)

Suitable monomers constituting the acryl-based resin are the same as those constituting the poly(meth)acryl-based resin according to the first embodiment.

Further, other monomers copolymerizable with the monomers constituting the acryl-based resin may be added. Compounds suitable as other monomers are the same as the monofunctional monomers and polyfunctional monomers according to the first embodiment.

As the acryl-based resin, a methyl methacrylate-styrene copolymer is preferable from the viewpoint of favorable environmental resistance (warping due to moisture absorption).

The methyl methacrylate-styrene copolymer resin has, on the basis of the total monomer units, preferably 30 to 95% by mass of methyl methacrylate units and 5 to 70% by mass of styrene units, more preferably 40 to 95% by mass of methyl methacrylate units and 5 to 60% by mass of styrene units, and yet more preferably 50 to 90% by mass of methyl methacrylate units and 10 to 50% by mass of styrene units. When the proportion of methyl methacrylate units is at least the above-mentioned lower limit or higher, the strength and surface hardness of the first resin base 1 are improved, and a light guide plate for image display with favorable scratch resistance is obtained. On the other hand, when the proportion of methyl methacrylate units is the above-mentioned upper limit or less, the environmental resistance is improved.

The acryl-based resin can be produced by polymerizing the monomer components described above by a known method such as suspension polymerization, emulsion polymerization, or bulk polymerization.

### (Polycarbonate-Based Resin)

The polycarbonate-based resin is not particularly limited, and aromatic polycarbonate, aliphatic polycarbonate, or alicyclic polycarbonate can be used.

Examples of the aromatic polycarbonate include i) aromatic polycarbonate obtained by reacting a dihydric phenol and a carbonylating agent through an interfacial polycondensation method or a melt transesterification method, ii) aromatic polycarbonate obtained by polymerizing carbonate prepolymer through a solid phase transesterification method, and iii) aromatic polycarbonate obtained by polymerizing a cyclic carbonate compound by a ring-opening polymerization method. Among the aromatic polycarbonates, i) aromatic polycarbonate obtained by reacting dihydric phenol and a carbonylating agent through an interfacial polycondensation method, a melt transesterification method, or the like is preferable in terms of productivity.

Examples of the dihydric phenol in the case i) mentioned above include hydroquinone, resorcinol, 4,4'dihydroxydiphenyl, bis(4-hydroxyphenyl)methane, bis{(4-hydroxy-3,5-dimethyl)phenyl[methane, 1,1 -bis(4-hydroxyphenyl)ethane, 1,1-bis(4-hydroxyphenyl)-1 - phenylethane, 2,2-bis(4-hydroxyphenyl)propane (common name: bisphenol A), 2,2-bis { (4-hydroxy-3-methyl)phenyl}propane, 2,2-bis{(4-hydroxy-3,5-dimethyl)phenyl} propane, 2,2-bis{(4-hydroxy-3,5-dibromo)phenyl}propane, 2,2-bis{(3-isopropyl-4-hydroxy)phenyl}propane, 2,2-bis{(4-hydroxy-3-phenyl)phenyl}propane,2,2-bis(4-hydroxyphenyl)butane,2,2-bis(4-hydroxyphenyl)-3-methylbutane, 2,2-bis(4-hydroxyphenyl)-3,3-dimethylbutane, 2,4-bis (4-hydroxyphenyl)-2-methylbutane, 2,2-bis(4-hydroxyphenyl)pentane, 2,2-bis(4-hydroxyphenyl)-4-methylpentane, 1,1-bis(4-hydroxyphenyl)cyclohexane, 1,1-bis(4-hydroxyphenyl)4-isopropylcyclohexane, 1,1-bis(4-hydroxyphenyl)-3,3,5-trimethylcyclohexane, 9,9-bis(4-hydroxyphenyl)fluorene, 9,9-bis{(4-hydroxy-3-methyl)phenyl } fluorene, α,α'-bis(4-hydroxyphenyl)-o-diisopropylbenzene, α,α'-bis(4-hydroxyphenyl)-m-diisopropylbenzene, α,α'-bis(4-hydroxyphenyl)-p-diisopropylbenzene, 1,3-bis(4-hydroxyphenyl)-5,7-dimethyladamantane, 4,4'-dihydroxydiphenyl sulfone, 4,4'-dihydroxydiphenyl sulfoxide, 4,4'-dihydroxydiphenyl sulfide, 4,4'-dihydroxydiphenyl ketone, 4,4'-dihydroxydiphenyl ether, 4,4'-dihydroxydiphenyl ester, and the like. The dihydric phenols can be used singly or in combination of two or more.

It is preferable that examples of the dihydric phenol include, among the elements mentioned above, one or two or more types of dihydric phenol selected from the group consisting of bisphenol A, 2,2-bis{(4-hydroxy-3-methyl)phenyl}propane, 2,2-bis(4-hydroxyphenyl)butane, 2,2 - bis(4-hydroxyphenyl)-3-methylbutane, 2,2-bis(4-hydroxyphenyl)-3,3-dimethylbutane, 2,2-bis(4-hydroxyphenyl)-4-methylpentane, 1,1-bis(4-hydroxyphenyl)-3,3,5-trimethylcyclohexane, and α,α'-bis(4-hydroxyphenyl)-m-diisopropylbenzene.

Among the elements, it is preferable to use bisphenol A alone, or use bisphenol A in combination with one or more dihydric phenols selected from the group consisting of 1,1-bis(4-hydroxyphenyl)-3,3,5-trimethylcyclohexane and bisphenol A, 2,2-bis{ (4-hydroxy-3-methyl) phenyl}propane, and α,α'-bis(4-hydroxyphenyl)-m-diisopropylbenzene.

Examples of the carbonylating agent in the case i) mentioned above include carbonyl halides such as phosgene, carbonate esters such as diphenyl carbonate, and haloformates such as dihaloformates of dihydric phenols. The carbonylating agents can be used singly or in combination of two or more.

### [Preferred Embodiment of First Resin Base 1]

A first preferred embodiment of the first resin base 1 consists of a resin layer (A) including a hard resin (a) having a hardness disperse phase in the matrix.

In a second preferred embodiment of the first resin base 1, the resin layer (A) including a hard resin (a) having a hardness disperse phase in the matrix and the resin layer (B) having main components different from the resin layer (A) are laminated.

### (Resin Layer (A))

The hard resin (a) forming the resin layer (A) includes a matrix resin and a disperse phase of hardness (hereinafter also referred to as "hardness disperse phase").

By forming the resin layer (A) from the hard resin (a), the scratch resistance of the first resin base 1 can be improved.

Further, the surface roughness of the resin layer (A) can be reduced by being formed of the hard resin (a). Therefore, since the surface roughness Sa of the first protective layer 3 described later is reduced, the moisture vapor barrier property is improved, and deterioration of the hologram layer 4 can be suppressed.

As the matrix resin of the resin layer (A), one or more resins selected from the group consisting of acryl-based resins, polycarbonate-based resins, polyester-based resins, and cycloolefin-based resins are preferable.

Among the resins, acryl-based resins are preferable since the resins have excellent transparency, scratch resistance, and moldability.

As the hardness disperse phase included in the hard resin (a) forming the resin layer (A), any one having at least one of heat resistance and scratch resistance superior to that of the acryl-based resin may be used, and thermosetting resins are preferable.

Examples of the thermosetting resins include not only polycondensation-based resins or addition condensation-based resins such as phenolic resins, amino-based resins, epoxy resins, silicone resins, thermosetting polyimide-based resins, and thermosetting polyurethane-based resins, but also include addition polymerization resins obtained by radical polymerization of unsaturated monomers such as thermosetting acryl-based resins, vinyl ester-based resins, unsaturated polyester-based resins, and diallyl phthalate resins. The thermosetting resins can be used singly or in combination of two or more.

Among the resins, when the unsaturated monomer is polyfunctional, the resin is preferable in that hard material properties (insoluble in acryl-based resin, high glass transition temperature) can be obtained by polymerization and cross-linking. Examples of unsaturated monomers include cross-linkable monomers such as polyols and polyesters of acrylic and/or methacrylic acid, as well as polyaryl and polyvinyl ethers of these polyols.

Specific examples of the unsaturated monomers include trimethylolpropane triacrylate, trimethylolpropane trimethacrylate, trimethylolpropane ethoxylate (di-, tri-)acrylate, trimethylolpropane diallyl ether, pentaerythritol triallyl ether, penta erythritol tetraallyl ether, di(trimethylolpropane)tetraacrylate, pentaerythritol tetraacrylate, pentaerythritol triacrylate, ethoxylated trimethylolpropane triacrylate, ethoxylated pentaerythritol tetraacrylate, and mixtures thereof. Among the unsaturated monomers, trimethylolpropane triacrylate (TMPTA) and trimethylolpropane trimethacrylate (TMPTMA) are preferable as the unsaturated monomers in consideration of affinity with acryl-based resins.

From the viewpoint of improving the scratch resistance of the first resin base 1, the pencil hardness of the hard resin (a) forming the resin layer (A) is preferably 3H or higher, more preferably 4H or higher, and yet more preferably 5H or higher.

As a method of making the pencil hardness of the hard resin (a) of 3H or greater, there is a method of including a hardness disperse phase (hereinafter also referred to as "hardness disperse phase") in the matrix of the hard resin (a).

The shape of the hardness disperse phase includes particulate, spherical, linear, fibrous, and the like, and is preferably spherical from the viewpoint of facilitating uniform dispersion in the matrix of the hard resin (a), but the present invention is not limited thereto.

The particle size of the hardness disperse phase is appropriately set, but is preferably in a range of 0.1 to 1000 µm.

When the particle size of the hardness disperse phase is 0.1 µm or greater, hardness can be imparted to the hard resin (a). From this point of view, the particle size of the hardness disperse phase is preferably 0.5 µm or greater, and more preferably 1 µm or greater.

Further, when the particle size is 1000 µm or less, the surface roughness of the resin layer (A) formed of the hard resin (a) can be reduced. Therefore, since the surface roughness Sa of the first protective layer 3 described later is reduced, the moisture vapor barrier property is improved, and deterioration of the hologram layer 4 can be suppressed. From this point of view, the particle size of the hardness disperse phase is preferably 500 µm or less, more preferably 100 µm or less, and yet more preferably 50 µm or less.

The particle size of the hardness disperse phase can be measured, for example, by reading from an SEM image or by an image analysis method.

The amount of the hardness disperse phase in the hard resin (a) is preferably in a range of 0.1 to 60 mass % of the total mass of the hard resin (a).

The hardness can be imparted to the hard resin (a) when the amount of the hardness disperse phase is 0.1 mass % or greater of the total mass of the hard resin (a). From this point of view, the content of the hardness disperse phase is preferably 0.5% by mass or greater, and more preferably 1% by mass or greater, on the basis of the total mass of the hard resin (a).

Further, when the amount of the hardness disperse phase is 60% or less by mass of the total mass of the hard resin (a), the surface roughness of the resin layer (A) formed of the hard resin (a) can be reduced. From this point of view, the content of the hardness disperse phase is preferably 50% by mass or less of the total mass of the hard resin (a).

Although the method of incorporating the hardness disperse phase into the hard resin (a) is not particularly limited, examples thereof include the following methods.
a) Add a material constituting the hardness disperse phase to the matrix resin material of the hard resin (a).
b) Next, form the hardness disperse phase in the matrix of the hard resin (a) by phase-separating and cross-linking the material constituting the hardness disperse phase when the matrix resin material is melt-kneaded and formed into a predetermined shape.

Alternatively, the method may be a method of dispersing a hardness disperse phase in a matrix of the hard resin (a) through the following way: a material that constitutes the hardness disperse phase is cross-linked in advance into particles or the like, added to the matrix resin material, melt-kneaded, and formed into a predetermined shape.

The hard resin (a) forming the resin layer (A) includes, in addition to the matrix resin and the hardness disperse phase, various additives such as a plasticizer, an antioxidant, an ultraviolet absorber, an antistatic agent, a lubricant, a flame retardant such as a silicone compound, a filler, a glass fiber, and an impact resistance modifier, within the range that does not impair the effects of the present invention.

The method of forming the resin layer (A) is not particularly limited as long as the method is able to form a film, sheet or plate. Examples of the method include melt extrusion molding, press molding, injection molding, calendar molding, and the like.

The thickness of the resin layer (A) forming the first resin base 1 is not particularly limited, but is preferably in a range of 0.05 to 5 mm.

When the thickness of the resin layer (A) is 0.05 mm or greater, an effect of improving scratch resistance can be obtained. From this point of view, the thickness of the resin layer (A) is preferably 0.1 mm or greater, and more preferably 0.2 mm or greater.

Further, when the thickness of the resin layer (A) is 5 mm or less, the moldability is improved. From this point of view, the thickness of the resin layer (A) is preferably 3 mm or less, and more preferably 2 mm or less.

### (Resin layer (B))

The resin layer (B) has a main component different from the resin layer (A). By laminating the resin layer (A) and the resin layer (B), secondary workability such as impact resistance and punchability of the first resin base 1 is improved.

As the resin layer (B), one or more resins selected from the group consisting of acryl-based resins, polycarbonate-based resins, polyester-based resins, and cycloolefin-based resins are preferable.

Among the resins, polycarbonate-based resins are preferable since the resins have excellent transparency, impact resistance, and moldability.

The resin layer (B) has a function of imparting the secondary workability such as excellent impact resistance and punchability to the first resin base 1 by being laminated on the resin layer (A). From this point of view, it is preferable that the thickness of the resin layer (B) be set on the basis of the ratio to the thickness of the resin layer (A) (ratio of the thickness to the total thickness when there are two or more resin layers (A)).

The ratio of the thickness of the resin layer (B) to the total thickness of the resin layer (A) (the thickness of the resin layer (B) / the total thickness of the resin layer (A)) (hereinafter also simply referred to as "thickness ratio") is not particularly limited, but may be preferably 2 or greater, and more preferably 4 or greater. When the thickness ratio is 2 or greater, the first resin base 1 can be provided with excellent impact resistance and secondary workability such as punchability.

Further, the thickness ratio is preferably 40 or less, and more preferably 20 or less. When the thickness ratio is 40 or less, deformation and warpage of the first resin base 1 can be suppressed under the usage environment.

The laminated structure of the resin layer (A) and the resin layer (B) is not particularly limited, but a structure in which the resin layer (A) is laminated on both sides of the resin layer (B) is preferable.

When the laminated structure of the resin layer (A) and the resin layer (B) is a structure in which the resin layer (A) is laminated on both sides of the resin layer (B), the resin layer (A) having favorable scratch resistance is disposed on the surface of the first resin base 1. Therefore, the scratch resistance of the first resin base 1 is improved. Further, when the resin layer (A) is laminated on both sides of the resin layer (B), the first resin base 1 may be exposed to high-temperature or high temperature and high humidity for a long time. Even in such a case, this structure is preferable in that warping and deformation are easily suppressed.

### [First Adhesive Layer 2]

From the viewpoint of improving the adhesiveness between the first resin base 1 and the first protective layer 3 and improving the moisture vapor barrier property, it is preferable that the first adhesive layer 2 be provided between the first resin base 1 and the first protective layer 3. In addition, when the adhesiveness between the first resin base 1 and the first protective layer 3 is improved, the first adhesive layer 2 is not essential.

The suitable material, the total ray transmittance, the refractive index, and the formation method of the first adhesive layer 2 are the same as those according to the first embodiment.

Although the thickness of the first adhesive layer 2 is not particularly limited, the thickness is preferably in a range of 1 to 700 µm.

Above all, from the viewpoint of improving the adhesive strength between the first resin base 1 and the first protective layer 3, the thickness of the first adhesive layer 2 is more preferably 3 µm or greater.

Further, from the viewpoint of suppressing color unevenness of the light guide plate for image display 8, the thickness of the first adhesive layer 2 is yet more preferably 100 µm or less.

### [First Protective Layer 3]

The suitable oxygen permeability, moisture vapor permeability and refractive index of the first protective layer 3 are the same as those according to the first embodiment.

The surface roughness Sa of the first protective layer 3 on the side in contact with the hologram layer 4 is less than 5.5 nm. When the surface roughness Sa is small, the first protective layer 3 is uniformly formed. Therefore, the moisture vapor barrier property is improved and deterioration of the hologram layer 4 can be suppressed. From this point of view, the surface roughness Sa of the first protective layer 3 on the side in contact with the hologram layer 4 is preferably 5.0 nm or less, more preferably 4.5 nm or less, and yet more preferably 4.0 nm or less, when the lower limit is 0 nm.

Although the thickness of the first protective layer 3 is not particularly limited, the thickness is preferably in a range of 10 to 200 µm.

Above all, the thickness of the first protective layer 3 is more preferably 30 µm or greater from the viewpoint of improving the mechanical strength and barrier properties of the first protective layer 3.

From the viewpoint of improving optical characteristics such as the total ray transmittance, the thickness of the first protective layer 3 is preferably 100 µm or less, more preferably 75 µm or less, and yet more preferably 50 µm or less.

It is preferable that the first protective layer 3 include an inorganic material. The inorganic material includes silicon oxides, silicon oxynitrides, diamond-like carbons (DLC), aluminum oxides, and glass. The inorganic materials can be used singly or in combination of two or more. From the viewpoint of ensuring favorable barrier properties, it is preferable that the first protective layer 3 include one or more materials selected from the group consisting of silicon oxides and silicon oxynitrides, and it is more preferable that the first protective layer 3 include silicon oxynitrides.

When the first protective layer 3 includes silicon oxide, silicon oxynitride, DLC or aluminum oxide, the suitable material and formation method are the same as those of the first barrier layer 3 of the first embodiment.

When the first protective layer 3 consists of silicon oxide or silicon oxynitride, the thickness of the first protective layer 3 is preferably in a range of 10 to 300 nm.

Above all, from the viewpoint of improving the barrier property of the first protective layer 3, the thickness of the first protective layer 3 is more preferably 20 nm or greater.

Further, from the viewpoint of improving the film formability of the first protective layer 3, the thickness of the first protective layer 3 is more preferably 200 nm or less.

When the first protective layer 3 consists of aluminum oxide, the thickness of the first protective layer 3 is preferably in a range of 5 to 800 nm.

When glass is used as the first protective layer 3, examples of the material of the glass may include borosilicate glass, alkali-free glass, low-alkali glass, soda-lime glass, sol-gel glass, glass subjected to heat treatment or surface treatment, or the like. As the glass, alkali-free glass is particularly preferable from the viewpoint of avoiding coloring due to impurities in the glass material.

When glass is used as the first protective layer 3, the thickness of the first protective layer 3 is preferably in a range of 10 to 200 µm.

Above all, the thickness of the first protective layer 3 is more preferably 30 µm or greater from the viewpoint of improving the mechanical strength and barrier properties of the first protective layer 3.

From the viewpoint of improving optical characteristics such as the total ray transmittance, the thickness of the first protective layer 3 is preferably 100 µm or less, more preferably 75 µm or less, and yet more preferably 50 µm or less.

When glass is used as the first protective layer 3, the method of forming the first protective layer 3 can be selected as appropriate, and for example, a slot down-draw method, a fusion method, a float method, or the like can be adopted. Further, commercially available glass may be used as it is, or commercially available glass may be polished to a desired thickness and used. Examples of commercially available glass include EAGLE2000 (manufactured by Corning Inc.), AN100 (manufactured by AGC Inc.), OA10G (manufactured by Nippon Electric Glass Co., Ltd.), and D263 (manufactured by Schott Inc.).

### [Hologram Layer 4]

Suitable materials of the hologram layer 4 are the same as those according to the first embodiment.

### [Second Laminate 12]

The second laminate 12 is provided with the second protective layer 5 and the second resin base 7 in this order. The second laminate 12 may have a second adhesive layer 6 between the second protective layer 5 and the second resin base 7. Various physical properties of the second laminate 12 may be different from the physical properties of the first laminate 11.

### [Second Adhesive Layer 6]

From the viewpoint of improving the adhesiveness between the second protective layer 5 and the second resin base 7 and improving the barrier property, it is preferable that the second adhesive layer 6 be provided between the second protective layer 5 and the second resin base 7. When the adhesiveness between the second protective layer 5 and the second resin base 7 is improved, the second adhesive layer 6 is not essential. As the second protective layer 5, the same configuration as in the description of the first protective layer 3 is used. However, the thickness, material, and the like of the second protective layer 5 may be different from those of the first protective layer 3.

### [Second Resin Base 7]

The second resin base 7 is laminated on a surface of the second protective layer 5 with or without the second adhesive layer 6 interposed therebetween. As the second resin base 7, the same configuration as in the description of the first resin base 1 is used. However, the thickness, material, and the like of the second resin base 7 may be different from those of the first resin base 1. In particular, the second resin base 7 is disposed on the surface of the light guide plate for image display 8 on the external light incident side located opposite to the display image emission side. Therefore, the second resin base 7 may employ a material of which the surface hardness is higher than that of the first resin base 1.

### [Light Guide plate for Image Display 8]

In the light guide plate for image display 8, the first adhesive layer 2 and the first protective layer 3 are disposed between the first resin base 1 and the hologram layer 4 and the second protective layer 5 and the second adhesive layer 6 are disposed between the second resin base 7 and the hologram layer 4.

The gas outside the light guide plate for image display 8 permeates the first resin base 1 and the second resin base 7 to some extent, or accumulates inside. At this time, moisture is particularly likely to accumulate in the first resin base 1 and the second resin base 7.

However, according to the configuration of the present embodiment, the first protective layer 3 and the second protective layer 5 is able to shield the moisture that permeates the first resin base 1 and the second resin base 7 from the outside. Thus, the permeation of moisture vapor to the hologram layer 4 is suppressed, and deterioration of the hologram layer 4 can be prevented.

Further, the chemical resistance of the first resin base 1 and the second resin base 7 is significantly lower than that of glass, although the degree of chemical resistance varies depending on the type of the resin material. Therefore, the first resin base 1 and the second resin base 7 have solvent resistance and hologram material resistance lower than that of glass.

When the first resin base 1 and the second resin base 7 are in contact with the hologram layer 4, a hologram agent, which is a component of the hologram layer 4, tends to permeate through the first resin base 1 and the second resin base 7, or the hologram agent tends to accumulate inside the first resin base 1 and the second resin base 7. When the first resin base 1 and the second resin base 7 are exposed to the hologram agent, the first resin base 1 and the second resin base 7 are deteriorated, and the field of view (FOV) and the definition tend to be lowered.

However, according to the configuration of the present embodiment, the first protective layer 3 and the second protective layer 5 are provided in each spacing between the first resin base 1 and the hologram layer 4 and each spacing between the second resin base 7 and the hologram layer 4. With such a configuration, by suppressing permeation of the hologram agent into the first resin base 1 and the second resin base 7, deterioration of the first resin base 1 and the second resin base 7 can also be prevented.

### [Hard Coat Layer]

In the light guide plate for image display of the present embodiment, a hard coat layer may be provided on one surface or both surfaces of the resin base for the purpose of increasing the pencil hardness of the surface of the resin base or reducing the surface roughness Sa of the barrier layer.

A suitable material, thickness, refractive index, and method of forming the hard coat layer are the same as those of the hard coat layer according to the first embodiment.

Further, the curable resin composition may be an organic inorganic hybrid curable resin composition in which the curable resin includes an inorganic component. Examples of the organic inorganic hybrid curable resin composition include those composed of a curable resin composition in which the curable resin includes an inorganic component having a reactive functional group. By using an inorganic component having such a reactive functional group, for example, the inorganic component is copolymerized and cross-linked with a radically polymerizable monomer. Therefore, this configuration is preferable in that the curable resin composition is less likely to cause curing shrinkage and is able to exhibit high surface hardness, as compared with an organic inorganic composite curable resin composition in which the organic binder simply includes an inorganic component. Furthermore, from the viewpoint of reducing curing shrinkage, a more preferred example is an organic inorganic hybrid curable resin composition including UV-reactive colloidal silica as an inorganic component having a reactive functional group.

### <Method of Manufacturing Light Guide plate for Image Display>

The method of manufacturing the light guide plate for image display of the present embodiment is the same as that according to the first embodiment.

### <<Sixth Embodiment>>

In a light guide plate for image display according to a sixth embodiment of the present invention, the resin base, the barrier layer, and the hologram layer are disposed in this order, and a specular glossiness of a laminate including the resin base and the barrier layer at an incidence angle of 60 degrees on a side where the laminate is in contact with the hologram layer is 120% or greater.

The light guide plate for image display of the present embodiment is able to suppress deterioration of the hologram layer by including the barrier layer. Further, by increasing the specular glossiness of the laminate, the sharpness of the light guide plate for image display is improved.

In the light guide plate for image display of the present embodiment, the resin base may include at least one resin selected from the group consisting of poly(meth)acryl-based resin, epoxy resin, cyclic polyolefin-based resin, and polycarbonate-based resin.

In the light guide plate for image display of the present embodiment, the barrier layer may include an inorganic material.

In the light guide plate for image display of the present embodiment, the inorganic material may be at least one inorganic material selected from the group consisting of silicon oxide, silicon oxynitride, diamond-like carbon, aluminum oxide, and glass.

In the light guide plate for image display of the present embodiment, the laminate may have the anchor coat layer between the resin base and the barrier layer.

In the light guide plate for image display of the present embodiment, the anchor coat layer may include at least one resin selected from the group consisting of acryl-based resin, urethane-based resin, and polyester-based resin.

Hereinafter, the light guide plate for image display according to the present embodiment will be described.

### <Light Guide plate for Image Display>

The light guide plate for image display of the present embodiment has at least the resin base, the barrier layer, and the hologram layer. The resin base, the barrier layer, and the hologram layer are disposed in this order in the thickness direction. The resin base and the barrier layer may be disposed on at least one surface of the hologram layer, but may be disposed on both surfaces of the hologram layer. When the resin base and the barrier layer are disposed on both surfaces of the hologram layer, the resin base and the barrier layer disposed on one surface of the hologram layer are respectively referred to as the first resin base and the first barrier layer, and the resin base and the barrier layer disposed on the other surface of the hologram layer are respectively referred to as a second resin base and a second barrier layer. In such a case, the hologram layer is interposed between the first barrier layer and the second barrier layer, the first resin base is laminated on the other surface of the first barrier layer, and the second resin base is laminated on the other surface of the second barrier layer. In the present embodiment, the first resin base and the second resin base may be generically referred to as simply the "resin base". Further, hereinafter, the first barrier layer and the second barrier layer may be collectively referred to as the "barrier layer".

One or more transparent layers may be disposed between the resin base and the barrier layer and between the barrier layer and the hologram layer. Examples of the transparent layers include the anchor coat layer and the hard coat layer.

From the viewpoint of improving the adhesiveness between the resin base and the barrier layer, it is preferable to provide the anchor coat layer between the resin base and the barrier layer. That is, it is preferable that the resin base, the anchor coat layer, the barrier layer, and the hologram layer be disposed in this order.

The anchor coat layer, the barrier layer and the transparent layer may be disposed on one surface of the resin base, but may be disposed on both surfaces of the resin base. That is, a configuration may be employed in which the barrier layer, the anchor coat layer, the resin base, the anchor coat layer, the barrier layer, and the hologram layer are disposed in this order in the thickness direction, or a configuration may be employed in which the barrier layer, the anchor coat layer, the transparent layer, the resin base, the transparent layer, the anchor coat layer, the barrier layer, and the hologram layer are disposed in this order in the thickness direction.

### [First Laminate 11]

A first laminate 11 includes the first resin base 1, the first anchor coat layer 2, and the first barrier layer 3 in this order. By disposing the first laminate 11 on the surface of the hologram layer 4, the light guide plate for image display 8 is able to suppress deterioration of the hologram layer. When the adhesiveness between the first resin base 1 and the first barrier layer 3 is improved, the first anchor coat layer 2 is not essential.

The first laminate 11 transmits image light emitted from the hologram layer 4 and external light transmitted through the second laminate and the hologram layer 4 described later.

The present inventors found that by increasing the specular glossiness of the first laminate 11, optical defects in the first laminate 11 are reduced and factors that diffuse light are reduced. Therefore, it was found that the sharpness of the light guide plate for image display 8 can be improved.

From the viewpoint of improving the sharpness of the light guide plate for image display 8, the specular glossiness at an incidence angle of 60 degrees onto the first laminate 11 on the side in contact with the hologram layer 4 is 120% or greater, preferably 130% or greater, more preferably 140% or greater, and yet more preferably 150% or greater.

It should be noted that the specular glossiness in the present invention is a measured value when the incidence angle of the light source is 60 degrees in accordance with JIS Z 8741:1997.

Although the total ray transmittance of the first laminate 11 is not particularly limited, the total ray transmittance is preferably 80% or greater, and more preferably 90% or greater. When the total ray transmittance is 80% or greater, the light guide plate for image display 8 has better sharpness and luminance values.

The transmission b* value in the CIE1976 L*a*b* color space defined in JIS Z 8781-4:2013 of the first laminate 11 is not particularly limited, but is preferably 0.90 or less, more preferably 0.50 or less, yet more preferably 0.40 or less, and most preferably 0.30 or less.

Although the refractive index of the first laminate 11 is not particularly limited, the refractive index is preferably 1.48 or greater. When the refractive index of the first laminate 11 is 1.48 or greater, the viewing angle can be further increased when used as a light guide plate for image display. Although the upper limit of the refractive index of the first laminate 11 is not particularly limited, the upper limit is usually 3.00 or less.

The refractive index in the present invention can be measured, for example, with a refractive index measurement device (model 2010/M prism coupler, manufactured by Metricon Corp.).

The surface roughness Sa of the first laminate 11 on the side in contact with the hologram layer 4 is not particularly limited, but is preferably 5 nm or less, more preferably 3 nm or less, yet more preferably 2 nm or less, and most preferably 1.5 nm or less. The smaller the surface roughness Sa of the first laminate 11 on the side in contact with the hologram layer 4, the more the diffusion of light due to surface unevenness can be suppressed, and the sharpness of the image can be further improved.

It should be noted that the surface roughness Sa in the present invention is a surface roughness measured using a white interferometer (VertScan, manufactured by Ryoka System Co., Ltd.).

The pencil hardness of the surface of the first laminate 11 on the side that is not in contact with the hologram layer 4 is not particularly limited, but is preferably 3H or higher, more preferably 4H or higher, and yet more preferably 5H or higher. The higher the pencil hardness of the surface of the first laminate 11 on the side that is not in contact with the hologram layer 4, the better the scratch resistance imparted to the light guide plate for image display 8.

The parallelism of the first laminate 11 in 50 mm × 100 mm is not particularly limited, but is preferably in a range of 0.01 to 5 µm. As the parallelism increases, the angle of reflection of light is more disturbed, and the wavelength dependency of luminance increases. This causes a problem in that the contrast of an image changes and the sharpness of the image decreases. When the parallelism is in the above-mentioned range, it is possible to further suppress deterioration in image sharpness due to a change in image contrast. The parallelism is evaluated by measurement using a Fizeau interferometer (laser interferometer).

From the viewpoint of preventing deterioration of the hologram layer 4, it is preferable that the first laminate 11 have at least one of oxygen barrier properties and moisture vapor barrier properties, and it is more preferable that the first laminate 11 have both thereof.

The oxygen permeability of the first laminate 11 is not particularly limited, but is preferably 1 cm³/m²/day/atm or less.

Further, the moisture vapor permeability of the first laminate 11 at 40°C 90% is preferably 1 g/m²/day or less, more preferably 0.5 g/m²/day or less, and yet more preferably 0.1 g/m²/day or less.

### [First Resin Base 1]

The suitable thickness, total ray transmittance, and material of the first resin base 1 are the same as those according to the first embodiment.

The surface roughness Sa of the first resin base 1 is not particularly limited, but is preferably 10 nm or less, and more preferably 5 nm or less. The smaller the surface roughness Sa, the smaller the surface roughness Sa of the first laminate 11, and the better the luminance value of the light guide plate for image display 8.

The specular glossiness of the first resin base 1 is not particularly limited, but is preferably 120% or greater, and more preferably 130% or greater. As the specular glossiness increases, the specular glossiness of the first laminate 11 can be increased, and the luminance value of the light guide plate for image display 8 is improved.

The transmission b* value in the CIE1976 L*a*b* color space defined in JIS Z 8781-4:2013 of the first resin base 1 is not particularly limited, but is preferably 0.50 or less, and more preferably 0.40 or less. The smaller the transmission b* value, the smaller the transmission b* value of the first laminate 11 can be.

### [First Anchor Coat Layer 2]

From the viewpoint of improving the adhesiveness between the first resin base 1 and the first barrier layer 3, it is preferable to provide the first anchor coat layer 2 between the first resin base 1 and the first barrier layer 3.

The suitable material, the total ray transmittance, the refractive index, and the formation method of the first anchor coat layer 2 are the same as those according to the first embodiment.

As the material of the first anchor coat layer 2, an acryl-based resin as a thermoplastic resin is preferable from the viewpoint of moisture vapor barrier properties. As the material of the first anchor coat layer 2, urethane-based resin or polyester-based resin is preferable from the viewpoint of improving the specular glossiness of the first laminate 11.

Although the thickness of the first anchor coat layer 2 is not particularly limited, the thickness may be, for example, in a range of 5 to 500 nm.

From the viewpoint of improving the adhesive strength between the first resin base 1 and the first barrier layer 3, the thickness of the first anchor coat layer 2 is preferably 5 nm or greater, and more preferably 10 nm or greater.

From the viewpoint of suppressing color unevenness of the light guide plate for image display 8, the thickness of the first anchor coat layer 2 is preferably 500 nm or less, and more preferably 200 nm or less.

### [First Barrier Layer 3]

The suitable oxygen permeability, the moisture vapor permeability, and the refractive index of the first barrier layer 3 are the same as those according to the first embodiment.

It is preferable that the first barrier layer 3 include an inorganic material. The inorganic material includes silicon oxides, silicon oxynitrides, diamond-like carbons (DLC), aluminum oxides, and glass. The inorganic materials can be used singly or in combination of two or more. From the viewpoint of improving the specular glossiness and barrier properties of the first laminate 11, it is preferable that the first barrier layer 3 include one or more materials selected from the group consisting of silicon oxides and silicon oxynitrides, and it is more preferable that the first barrier layer 3 include silicon oxides.

When the first barrier layer 3 includes silicon oxide, silicon oxynitride, DLC or aluminum oxide, the suitable material and formation method are the same as those of the first barrier layer 3 of the first embodiment.

When the first barrier layer 3 includes silicon oxide, silicon oxynitride or aluminum oxide, the suitable thickness thereof is the same as the first protective layer 3 of the fifth embodiment.

When forming the first barrier layer 3 from silicon oxide or silicon oxynitride by the reactive sputtering, the total gas flow rate is preferably 150 sccm or less, more preferably 120 sccm or less, and yet more preferably 90 sccm or less. When the total gas flow rate is in the above-mentioned range, the specular glossiness at the incidence angle of 60 degrees onto the first laminate 11 on the side in contact with the hologram layer 4 can be made higher.

When the first barrier layer 3 includes glass, the suitable material and the formation method thereof are the same as those of the fifth embodiment.

Further, when the first barrier layer 3 is made of glass, the first barrier layer 3 may be formed on the outer surface side of the first resin base 1, that is, on the side opposite to the hologram layer 4.

### [Hologram Layer 4]

Suitable materials of the hologram layer 4 are the same as those according to the first embodiment.

### [Second Laminate]

The second laminate includes the second barrier layer 5, the second anchor coat layer 6, and the second resin base 7 in this order. When the adhesiveness between the second barrier layer 5 and the second resin base 7 is improved, the second anchor coat layer 6 is not essential. Various physical properties of the second laminate may be different from the physical properties of the first laminate 11.

### [Second Barrier Layer 5]

The second barrier layer 5 is laminated on an opposite side of the first barrier layer 3 with the hologram layer 4 interposed therebetween. As the second barrier layer 5, the same configuration as in the description of the first barrier layer 3 is used. However, the thickness, material, and the like of the second barrier layer 5 may be different from those of the first barrier layer 3.

### [Second Anchor Coat Layer 6]

From the viewpoint of improving the adhesiveness between the second barrier layer 5 and the second resin base 7, it is preferable to provide the second anchor coat layer 6 between the second barrier layer 5 and the second resin base 7. When the adhesiveness between the second barrier layer 5 and the second resin base 7 is improved, the second anchor coat layer 6 is not essential. As the second anchor coat layer 6, the same configuration as in the description of the first anchor coat layer 2 is used. However, the thickness, material, and the like of the second anchor coat layer 6 may be different from those of the first anchor coat layer 2.

### [Second Resin Base 7]

The second resin base 7 is laminated on the surface of the second barrier layer 5 with or without the second anchor coat layer 6 interposed therebetween. As the second resin base 7, the same configuration as in the description of the first resin base 1 is used. However, the thickness, material, and the like of the second resin base 7 may be different from those of the first resin base 1. In particular, the second resin base 7 is disposed on the surface of the light guide plate for image display 8 on the external light incident side located opposite to the display image emission side. Therefore, the second resin base 7 may employ a material of which the surface hardness is higher than that of the first resin base 1.

### [Light Guide plate for Image Display 8]

In the light guide plate for image display 8, the first barrier layer 3 is disposed between the first resin base 1 and the hologram layer 4, and the second barrier layer 5 is disposed between the second resin base 7 and the hologram layer 4.

The chemical resistance of the first resin base 1 and the second resin base 7 is significantly lower than that of glass, although the degree of chemical resistance varies depending on the type of the resin material. Therefore, the first resin base 1 and the second resin base 7 have solvent resistance and hologram material resistance lower than that of glass.

When the first resin base 1 and the second resin base 7 are in contact with the hologram layer 4, a hologram agent, which is a component of the hologram layer 4, tends to permeate through the first resin base 1 and the second resin base 7, or the hologram agent tends to accumulate inside the first resin base 1 and the second resin base 7. When the first resin base 1 and the second resin base 7 are exposed to the hologram agent, the first resin base 1 and the second resin base 7 are deteriorated, and the field of view (FOV) and the definition tend to be lowered.

However, according to the configuration of the present embodiment, the first barrier layer 3 and the second barrier layer 5 are provided in each spacing between the first resin base 1 and the hologram layer 4 and each spacing between the second resin base 7 and the hologram layer 4. With such a configuration, by suppressing permeation of the hologram agent into the first resin base 1 and the second resin base 7, deterioration of the first resin base 1 and the second resin base 7 is prevented.

### [Hard Coat Layer]

In the light guide plate for image display of the present embodiment, a hard coat layer may be provided on one surface or both surfaces of the resin base for the purpose of increasing the pencil hardness of the surface of the resin base or reducing the surface roughness Sa of the barrier layer.

A suitable material, thickness, refractive index, and method of forming the hard coat layer are the same as those of the hard coat layer according to the first embodiment.

### <Method of Manufacturing Light Guide plate for Image Display>

The method of manufacturing the light guide plate for image display of the present embodiment is the same as that according to the first embodiment.

### [Examples]

Hereinafter, the present invention will be described in more detail with reference to test examples and manufacturing examples. However, the present invention is not limited to the test examples and manufacturing examples described later and various modifications can be made without departing from the gist of the present invention.

### <<Test Examples and Manufacturing Examples of First Embodiment>>

Hereinafter, the test examples and the manufacturing examples of the first embodiment will be described.

### <Test Example 1>

As a material of the resin base, PMMA (polymethyl methacrylate, trade name: Acrylite (registered trademark), manufactured by Mitsubishi Chemical Corp.) is used. The resin base is a rectangular plate having a width of 200 mm, a length of 200 mm, and a thickness of 1 mm.

As a material of the hard coat layer, an acryl-based UV-curable resin (trade name "Shikou UV1700B", manufactured by Mitsubishi Chemical Corp.) is used.

As a material of the anchor coat layer, an anchor coat liquid 1-1 (indicated as "AC1-1" in Table 1, tan δ peak temperature: 78°C), in which an acryl-based resin 1-1 and an isocyanate compound are blended at a mass ratio of 10:1, is used.

Silicon oxynitride is used as the material of the barrier layer.

Using the above-mentioned materials, the base provision step and the barrier layer formation step described below are performed to produce a laminate.

### [Base Provision Step]

In the base provision step, after washing and drying the resin base, the hard coat layer is formed on the resin base.

The resin base is ultrasonically cleaned for 5 minutes in a state in which the resin base is cut into a rectangular shape of 200 mm × 200 mm and immersed in a 5% surfactant aqueous solution of a neutral detergent (trade name "Semiclean (registered trademark) M-LO", manufactured by Yokohama Yushi Kogyo Co., Ltd.) for 5 minutes.

Thereafter, the resin base is ultrasonically cleaned for 5 minutes while being immersed in ultrapure water. Further, the resin base is rinsed with ultrapure water, and after air-drying, the resin base is dried in an oven at 80°C under a nitrogen atmosphere. Thereafter, the air-dried evaluation sample is cleaned with UV ozone for 1 minute in a UV ozone washing machine.

Next, an acryl-based UV-curable resin, which is a material of the hard coat layer, is applied to both surfaces of the resin base using a bar coater, dried at 90°C for 1 minute, and then exposed to light with an integrated light amount of 500 mJ/cm² on both surfaces, thereby providing a hard coat layer having a thickness of 5 µm.

### [Barrier Layer Formation Step]

In the barrier layer formation step, the barrier layer is formed on the surface of the hard coat layer through the anchor coat layer.

The anchor coat liquid 1-1 is applied to the surface of the hard coat layer using the bar coater and dried at 60°C for 1 minute to provide the anchor coat layer having a thickness of 200 nm.

Film formation of silicon oxynitride having a thickness of 100 nm is performed under the conditions shown in Table 1 while oxygen gas, nitrogen gas, and argon gas are supplied by a reactive sputtering method using silicon (manufactured by Kojundo Chemical Laboratory Co., Ltd.) as a target.

By the above-mentioned operation, the laminate of Test Example 1 consisting of hard coat layer / resin base / hard coat layer / anchor coat layer (AC1-1, 200 nm) / barrier layer (silicon oxynitride, 100 nm) is obtained.

### <Test Example 2>

In Test Example 2, the material of the anchor coat layer is set as an anchor coat liquid 1-2 (indicated as "AC1-2" in Table 1, tan δ peak temperature: 56°C), in which the acryl-based resin 1-2 and the isocyanate compound are blended at a mass ratio of 10:1, and the laminate is produced in the same manner as in Test Example 1 except that the thickness of the anchor coat layer, the thickness of the barrier layer, and the film formation conditions are changed as shown in Table 1.

That is, the laminate of Test Example 2 consists of hard coat layer / resin base / hard coat layer / anchor coat layer (AC1-2, 100 nm) / barrier layer (silicon oxynitride, 100 nm).

### <Test Example 3>

In Test Example 3, the laminate is produced in the same manner as in Test Example 2, except that the thickness of the anchor coat layer, the thickness of the barrier layer, and the film formation conditions are changed as shown in Table 1.

That is, the laminate of Test Example 3 consists of hard coat layer / resin base / hard coat layer / anchor coat layer (AC1-2, 50 nm) / barrier layer (silicon oxynitride, 30 nm).

### <Test Example 4>

In Test Example 4, the material of the anchor coat layer is set as an anchor coat liquid 1-3 (indicated as "AC1-3" in Table 1, tan δ peak temperature: 32°C), in which the polyester-based resin 1-1 and the isocyanate compound are blended at a mass ratio of 10:1, and the laminate is produced in the same manner as in Test Example 1 except that the thickness of the anchor coat layer, the thickness of the barrier layer, and the film formation conditions are changed as shown in Table 1.

That is, the laminate of Test Example 4 consists of hard coat layer / resin base / hard coat layer / anchor coat layer (AC1-3, 50 nm) / barrier layer (silicon oxynitride, 40 nm).

### <Test Example 5>

In Test Example 5, the material of the anchor coat layer was set as an anchor coat liquid 1-4 (indicated as "AC1-4" in Table 1, tan δ peak temperature: 20°C), in which the polyester-based resin 1-2 and the isocyanate compound were blended at a mass ratio of 10:1, and the laminate was produced in the same manner as in Test Example 1 except that the thickness of the anchor coat layer, the thickness of the barrier layer, and the film formation conditions were changed as shown in Table 1.

That is, the laminate of Test Example 5 consisted of hard coat layer / resin base / hard coat layer / anchor coat layer (AC1-4, 25 nm) / barrier layer (silicon oxynitride, 130 nm).

### <Test Example 6>

In Test Example 6, the material of the anchor coat layer is set as an anchor coat liquid 1-5 (indicated as "AC1-5" in Table 1, tan δ peak temperature: 72°C), in which the acryl-based resin 1-3 and the isocyanate compound are blended at a mass ratio of 10:1, and the laminate is produced in the same manner as in Test Example 1 except that the thickness of the anchor coat layer, the thickness of the barrier layer, and the film formation conditions are changed as shown in Table 1.

That is, the laminate of Test Example 6 consists of hard coat layer / resin base / hard coat layer / anchor coat layer (AC1-5, 150 nm) / barrier layer (silicon oxynitride, 50 nm).

### <Test Example 7>

In Test Example 7, the laminate is produced in the same manner as in Test Example 4, except that the thickness of the anchor coat layer, the thickness of the barrier layer, and the film formation conditions are changed as shown in Table 1.

That is, the laminate of Test Example 7 consists of hard coat layer / resin base / hard coat layer / anchor coat layer (AC1-3, 100 nm) / barrier layer (silicon oxynitride, 210 nm).

Table 1 shows materials of the resin bases (resin base materials) of the laminates of Test Examples 1 to 7, materials of the hard coat layers (hard coat layer materials) thereof, materials of the anchor coat layers (AC layer materials) thereof, film formation pressures of the barrier layers (film formation pressure [Pa]) thereof, electric power during film formation (electric power [W]) thereof, flow rates of Ar (Ar [sccm]) thereof, flow rates of O₂ (O₂ [sccm]) thereof, flow rates of N₂ (N₂ [sccm]) thereof, and thicknesses of the barrier layers (thicknesses [nm]) thereof.

### <Measurement and Evaluation Method>

The methods for measuring and evaluating various physical property values of laminates obtained in Test Examples 1 to 7 will be described.

### (Tan δ Peak Temperature)

The anchor coat liquids 1-1 to 1-5 of Test Examples 1 to 7 are dried at 80°C to produce sheets having a thickness of 200 µm.

The viscoelasticity measurement is performed on the produced sheet by using a dynamic viscoelasticity measurement device (DVA-200, manufactured by IT Instrument Control Co., Ltd.) under conditions of a frequency of 1 Hz, a temperature increase rate of 3°C/min, and a measurement temperature of -50 to 200°C. Thereby, the peak temperature [°C] of the loss tangent (tan δ) is obtained.

### (Elemental Formulation of Barrier Layer)

Regarding the laminates of Test Examples 1 to 7, by using an X-ray photoelectron spectrometer (K-Alpha, manufactured by Thermo Fisher Scientific Corp.), the binding energy is measured by the X-ray photoelectron spectroscopy (XPS), and is converted from areas of the peaks corresponding to Si2P, O1S, N1S, and C1S. Thereby, each elemental formulation [atm%] is calculated.

The measured values of the elemental formulations [atm%] are shown in the columns of "Si [atm%]", "O [atm%]", "N [atm%]", and "C [atm%]" of "barrier layer formulations" in Table 2.

### (Total Ray Transmittance and Haze)

Regarding the laminates of Test Examples 1 to 7, by using a haze meter (NDH 7000II, manufactured by Nippon Denshoku Industries), the barrier layer side of the laminate is provided on the light source side, and the total ray transmittance [%] and the haze [%] are measured by the measurement method JIS (total ray transmittance: JIS K7361-1, haze: JIS7136).

Further, the laminates of Test Examples 1 to 7 are placed in a thermostat and humidistat device which is set under conditions of a temperature of 40°C and a relative humidity of 90%RH, and then after 10 days, the total ray transmittance [%] and the haze [%] are measured in a similar manner.

The columns of "Immediately after film formation" and "10 days after 40°C 90%" for the "Total ray transmittance [%]" and for the "Haze [%]" in Table 2 respectively show measured values of the total ray transmittance [%] and the haze [%] immediately after formation of the barrier layer. Further, the "40°C 90% 10 days later" columns of the "Total ray transmittance [%]" and the "Haze [%]" show measured values of the total ray transmittance [%] and the haze [%] 10 days after the laminate was placed in the thermostat and humidistat device which was set under conditions of the temperature of 40°C and the relative humidity of 90%RH.

### (b*)

Regarding the laminates of Test Examples 1 to 7, by using a spectroscopic colorimeter (SD 6000, manufactured by Nippon Denshoku Industries), the laminate is provided such that the barrier layer side of the laminate is on the light source side, and b* is measured under the following conditions (measurement method: transmission, specular light treatment: SCI, light source: C, field of view: 2°).

Further, the laminates of Test Examples 1 to 7 are placed in the thermostat and humidistat device which is set under conditions of a temperature of 40°C and a relative humidity of 90%RH, and after 10 days, b* is measured in a similar manner.

The columns of "Immediately after film formation" and " 10 days after 40°C 90%" for "b*" in Table 2 show measured values of b^{∗} immediately after film formation of the barrier layer and measured values of b^{∗} 10 days after the laminate was placed in the thermostat and humidistat device which was set under conditions of a temperature of 40°C and a relative humidity of 90%RH.

### (Moisture Vapor Barrier Property)

By using the moisture vapor permeability measurement device (DELTAPERM, manufactured by Technolox), the barrier layer side of each laminate of Test Examples 1 to 7 is directed to be set on a detector side (the resin base side is a side exposed to moisture vapor), and the moisture vapor permeability [g/m²/day] is measured under the conditions of a temperature of 40°C and a relative humidity of 90%RH.

The column of "Moisture vapor permeability [g/m²/day]" in Table 2 shows measured values of the moisture vapor permeability.

**[Table 1]**

| | Resin base | Hard coat layer | Anchor coat layer | Barrier layer | | | | | |
|---|---|---|---|---|---|---|---|---|---|
| | Material | Material | Material | Film formation pressure [Pa] | Electric Power [W] | Ar [sccm] | O₂ [sccm] | N₂ [seem] | Thickness [nm] |
| Test example 1 | PMMA | Acryl-based UV-curable resin | AC1-1 | 0.12 | 2000 | 33 | 5 | 33 | 100 |
| Test example 2 | PMMA | Acryl-based UV-curable resin | ACl-2 | 0.12 | 1500 | 33 | 5 | 33 | 100 |
| Test example 3 | PMMA | Acryl-based UV-curable resin | ACl-2 | 0.05 | 1000 | 16 | 2 | 16 | 30 |
| Test example 4 | PMMA | Acryl-based UV-curable resin | AC1-3 | 0.10 | 2000 | 23 | 23 | 23 | 40 |
| Test example 5 | PMMA | Acryl-based UV-curable resin | ACl-4 | 0.12 | 2000 | 33 | 5 | 33 | 130 |
| Test example 6 | PMMA | Acryl-based UV-curable resin | ACI-5 | 0.14 | 1700 | 45 | 3 | 22 | 50 |
| Test example 7 | PMMA | Acryl-based UV-curable resin | AC1-3 | 0.04 | 2000 | 16 | 2 | 16 | 210 |

**[Table 2]**

| | Barrier layer | | | | Total ray transmittance [%] | | Haze [%] | | b* | | Moisture vapor permeability [g/m²/day] |
|---|---|---|---|---|---|---|---|---|---|---|---|
| | Si [atm%] | O [atm%] | N [atm%] | C [atm%] | Immediately after film formation | After 10 days at 40°C 90% | Immediately after film formation | After 10 days at 40°C 90% | Immediately after film formation | After 10 days at 40°C 90% | |
| Test example 1 | 38.6 | 45.1 | 150 | 1.3 | 91.0 | 90.9 | 0.04 | 0.03 | -0.48 | -0.37 | 0.005 |
| Test example 2 | 37.3 | 58.2 | 2.8 | 1.7 | 92.3 | 92.3 | 0.04 | 0.21 | 0.03 | 0.03 | 0.002 |
| Test example 3 | 39.9 | 36.1 | 22.0 | 1.9 | 90.9 | 90.8 | 0.06 | 0.08 | 0.30 | 0.32 | 0.006 |
| Test example 4 | 35.6 | 62.9 | 0.6 | 1.2 | 91.7 | 91.6 | 0.07 | 0.08 | 0.38 | 0.40 | 0.008 |
| Test example 5 | 40.0 | 39.6 | 19.0 | 1.5 | 90.7 | 90.6 | 0.06 | 0.05 | -0.41 | -0.34 | 0.003 |
| Test example 6 | 41.6 | 30.7 | 26.5 | 1.3 | 84.8 | 84.7 | 0.06 | 0.08 | 0.83 | 0.87 | 0.005 |
| Test example 7 | 44.1 | 17.6 | 36.8 | 1.6 | 86.2 | 86.1 | 0.10 | 2.80 | 1.99 | 1.92 | 1.1 |

### <Explanation of Results>

In the laminates of Test Examples 1 to 5, the nitrogen element formulation of the barrier layer is greater than 0 atm% and 25 atm% or less. Therefore, favorable optical characteristics are obtained in all of total ray transmittance, haze and b*. Since the laminates have low moisture vapor permeabilities, the laminates are highly effective in preventing deterioration due to the hologram layer.

Further, the laminates do not deteriorate in optical characteristics even after being stored at 40°C and 90% for 10 days.

### <Manufacturing Example 1>

Hereinafter, an example of manufacturing a light guide plate for image display 8 using the laminate of Test Example 1 is shown.

In addition, as a photosensitive material for forming the hologram layer 4, 100 parts by mass of bisphenol-based epoxy resin JER (registered trademark) 1007 (manufactured by Mitsubishi Chemical Corp., polymerization degree n = 10.8, epoxy equivalent: 1750 to 2200), 50 parts by mass of triethylene glycol diacrylate, 5 parts by mass of 4,4'-bis(tert-butylphenyl)iodonium hexafluorophosphate, and 0.5 parts by mass of 3,3'-carbonylbis(7-diethylamino)coumarin are mixed and dissolved in 100 parts by mass of 2-butanone (hereinafter also referred to as "photosensitive material A").

### (Light Guide Plate Production Step)

In the light guide plate production step of Manufacturing Example 1, two laminates of Test Example 1 are used to produce the light guide plate for image display 8.

A seal layer having a width of 5 mm and a thickness of 5 µm is applied to the peripheral portion of the barrier layer of one laminate.

The seal layer consists of a transparent material, and is not particularly limited as long as the material is able to bond the barrier layers of the laminate to each other, and a photo adhesive ("Hard Rock (registered trademark) OP-1045K" trade name; manufactured by Denka Company Limited) is used in Manufacturing Example 1.

Thereby, an intermediate body with a seal layer step, of which an opening portion surrounded by the seal layer has a size of 50 mm × 50 mm, is formed.

Thereafter, a photosensitive material A, which forms the hologram layer 4, is applied onto the intermediate body by spin coating. The photosensitive material A is applied so as to have a thickness of 5 µm after drying.

Thereafter, the other laminate is laminated on the hologram layer 4 through the seal layer such that the barrier layer faces the barrier layer of the intermediate body with the seal layer step, and press-bonded under reduced pressure. The conditions for press bonding are an absolute pressure of 5 kPa, a temperature of 70°C, and a press pressure of 0.04 MPa.

Thereafter, a diffraction grating is recorded on the hologram layer 4 that has been press-bonded. In the step, the temperature of the laminate including the hologram layer 4 is kept at 20°C. The diffraction grating forms interference fringes so that a required diffraction pattern is formed by irradiating the laminate with two laser beams and adjusting each irradiation angle and each intensity thereof. Thereby, the diffraction grating is recorded on the hologram layer 4.

This diffraction grating is a diffraction grating for color display that diffracts light in each of the wavelength regions of red, green, and blue incident as image light incident on the incidence portion, and emits the light from the display portion at positions corresponding to the pixels of the image light.

Thereafter, while the laminate including the hologram layer 4 is kept at 20°C, the entire surface of the laminate is irradiated with ultraviolet light (a wavelength of 365 nm, irradiance: 80 W/cm²) from one side for 30 seconds. A high pressure mercury lamp is used as the light source for ultraviolet light.

Thereby, the seal layer is cured, and the light guide plate for image display 8 of Manufacturing Example 1 is produced.

### <<Test Examples and Manufacturing Examples of Second Embodiment>>

Hereinafter, the test examples and the manufacturing examples of the second embodiment will be described.

### <Test Example 8>

The materials for the resin base, the hard coat layer, and the barrier layer are the same as in Test Example 1 mentioned above.

As a material of the anchor coat layer, an anchor coat liquid 2-1 (indicated as "AC2-1" in Table 3, tan δ peak temperature: 20°C), in which an amorphous polyester-based resin and an isocyanate compound are blended at a mass ratio of 10:1, is used.

After the base provision step is performed in the same manner as in Test Example 1, the barrier layer formation step described below is performed to produce the laminate.

### [Barrier Layer Formation Step]

In the barrier layer formation step, the barrier layer is formed on the surface of the hard coat layer through the anchor coat layer.

The anchor coat liquid 2-1 is applied to the surface of the hard coat layer using the bar coater and dried at 60°C for 1 minute to provide the anchor coat layer having a thickness of 25 nm.

Film formation of silicon oxynitride having a thickness of 130 nm is performed under the conditions shown in Tables 3 and 4 while oxygen gas, nitrogen gas, and argon gas are supplied by a reactive sputtering method using silicon (manufactured by Kojundo Chemical Laboratory Co., Ltd.) as a target.

By the above-mentioned operation, the laminate of Test Example 8 consisting of hard coat layer / resin base / hard coat layer / anchor coat layer (AC2-1, 25 nm) / barrier layer (silicon oxynitride, 130 nm) is obtained.

### <Test Example 9>

In Test Example 9, the laminate is produced in the same manner as in Test Example 8, except that the thickness of the anchor coat layer, the thickness of the barrier layer, and the film formation conditions are changed as shown in Tables 3 and 4.

That is, the laminate of Test Example 9 consists of hard coat layer / resin base / hard coat layer / anchor coat layer (AC2-1, 100 nm) / barrier layer (silicon oxynitride, 50 nm).

### <Test Example 10>

In Test Example 10, the material of the anchor coat layer is set as an anchor coat liquid 2-2 (indicated as "AC2-2" in Table 3, tan δ peak temperature: 56°C), in which the acryl-based resin and the isocyanate compound are blended at a mass ratio of 10:1, and the laminate is produced in the same manner as in Test Example 8 except that the thickness of the anchor coat layer, the thickness of the barrier layer, and the film formation conditions are changed as shown in Tables 3 and 4.

That is, the laminate of Test Example 8 consists of hard coat layer / resin base / hard coat layer / anchor coat layer (AC2-2, 100 nm) / barrier layer (silicon oxynitride, 100 nm).

### <Test Example 11>

In Test Example 11, the laminate is produced in the same manner as in Test Example 10, except that the thickness of the anchor coat layer, the thickness of the barrier layer, and the film formation conditions are changed as shown in Tables 3 and 4.

That is, the laminate of Test Example 11 consists of hard coat layer / resin base / hard coat layer / anchor coat layer (AC2-2, 50 nm) / barrier layer (silicon oxynitride, 20 nm).

### <Test Example 12>

In Test Example 12, the material of the anchor coat layer is set as an anchor coat liquid 2-3 (indicated as "AC2-3" in Table 3, tan δ peak temperature: 72°C), in which the acryl-based resin and the isocyanate compound are blended at a mass ratio of 10:1, and the laminate is produced in the same manner as in Test Example 8 except that the thickness of the anchor coat layer, the thickness of the barrier layer, and the film formation conditions are changed as shown in Tables 3 and 4.

That is, the laminate of Test Example 12 consists of hard coat layer / resin base / hard coat layer / anchor coat layer (AC2-3, 100 nm) / barrier layer (silicon oxynitride, 100 nm).

### <Test Example 13>

In Test Example 13, the laminate is produced in the same manner as in Test Example 12, except that the thickness of the anchor coat layer, the thickness of the barrier layer, and the film formation conditions are changed as shown in Tables 3 and 4.

That is, the laminate of Test Example 13 consists of hard coat layer / resin base / hard coat layer / anchor coat layer (AC2-3, 50 nm) / barrier layer (silicon oxynitride, 70 nm).

### <Test Example 14>

In Test Example 14, the laminate is produced in the same manner as in Test Example 8, except that the thickness of the anchor coat layer is changed as shown in Table 3.

That is, the laminate of Test Example 14 consists of hard coat layer / resin base / hard coat layer / anchor coat layer (AC2-1, 200 nm) / barrier layer (silicon oxynitride, 130 nm).

### <Test Example 15>

In Test Example 15, the laminate is produced in the same manner as in Test Example 11, except that the thickness of the barrier layer is changed as shown in Table 4.

That is, the laminate of Test Example 15 consists of hard coat layer / resin base / hard coat layer / anchor coat layer (AC2-3, 100 nm) / barrier layer (silicon oxynitride, 160 nm).

### <Test Example 16>

In Test Example 16, the material of the anchor coat layer is set as an anchor coat liquid 2-4 (indicated as "AC2-4" in Table 3, tan δ peak temperature: 82°C), in which the acryl-based resin and the isocyanate compound are blended at a mass ratio of 10:1, and the laminate is produced in the same manner as in Test Example 8 except that the thickness of the anchor coat layer, the thickness of the barrier layer, and the film formation conditions are changed as shown in Tables 3 and 4.

That is, the laminate of Test Example 16 consists of hard coat layer / resin base / hard coat layer / anchor coat layer (AC2-4, 100 nm) / barrier layer (silicon oxynitride, 100 nm).

Tables 3 and 4 show the material of the resin base, the material of the hard coat layer, the material of the anchor coat layer, the thickness of the anchor coat layer, the material of the barrier layer, the film formation pressure of the barrier layer, the electric power during film formation, the flow rates of Ar, O₂, and N₂, and the thickness of the barrier layer of the laminates of Test Examples 8 to 16.

### <Measurement and Evaluation Method>

The methods for measuring and evaluating various physical property values of laminates obtained in Test Examples 8 to 16 will be described.

### (Tan δ Peak Temperature)

The anchor coat liquids 2-1 to 2-4 of Test Examples 8 to 16 are dried at 80°C to produce sheets having a thickness of 200 µm.

The viscoelasticity measurement is performed on the produced sheet by using a dynamic viscoelasticity measurement device (DVA-200, manufactured by IT Instrument Control Co., Ltd.) under conditions of a frequency of 1 Hz, a temperature increase rate of 3°C/min, and a measurement temperature of -50 to 200°C. Thereby, the peak temperature [°C] of the loss tangent (tan δ) is obtained.

The column of the "tan δ peak temperature [°C]" of the "anchor coat layer" in Table 3 shows measured values of the peak temperature [°C] of the loss tangent (tan δ).

### (Appearance Evaluation)

The appearance of the laminates of Test Examples 8 to 16 immediately after formation of the barrier layer in the barrier layer formation step is observed and evaluated in accordance with the following criteria.

Further, the laminates of Test Examples 8 to 16 are placed in the thermostat and humidistat device which is set under conditions of a temperature of 40°C and a relative humidity of 90%RH, and after one day, the appearance is observed and evaluated again in accordance with the following criteria.
A (good): cracks are not observed on the surface of the barrier layer.
B (poor): cracks occur on the surface of the barrier layer.

The column of "Immediately after film formation" and the column of " 1 day after 40°C 90%" for "Appearance evaluation" in Table 4 show appearance evaluation immediately after film formation of the barrier layer and appearance evaluation after one day since the laminate is placed in the thermostat and humidistat device which is set under conditions of a temperature of 40°C and a relative humidity of 90%RH.

### (Moisture Vapor Barrier Property)

By using the moisture vapor permeability measurement device (DELTAPERM, manufactured by Technolox), the barrier layer side of each laminate of Test Examples 8 to 16 is directed to be set on a detector side (the resin base side is a side exposed to moisture vapor), and the moisture vapor permeability [g/m²/day] is measured under the conditions of a temperature of 40°C and a relative humidity of 90%RH.

The column of "Moisture vapor permeability [g/m²/day]" in Table 4 shows measured values of the moisture vapor permeability.

**[Table 3]**

| | Resin base | Hard coat layer | Anchor coat layer | | | Barrier layer | | |
|---|---|---|---|---|---|---|---|---|
| | Material | Material | Material | Tan δ peak temperature [°C] | Thickness [nm] | Material | Film formation pressure [Pa] | Electric Power [W] |
| Test example 8 | PMMA | Acryl-based UV-curable resin | AC2-1 | 20 | 25 | Silicon oxynitride | 0.1 | 2000 |
| Test example 9 | PMMA | Acryl-based UV-curable resin | AC2-1 | 20 | 100 | Silicon oxynitride | 0.2 | 2000 |
| Test example 10 | PMMA | Acryl-based UV-curable resin | AC2-2 | 56 | 100 | Silicon oxynitride | 0.1 | 1500 |
| Test example | PMMA | Acryl-based | AC2-2 | 56 | 50 | Silicon | 0.1 | 1000 |
| 11 | | UV-curable resin | | | | oxynitride | | |
| Test example 12 | PMMA | Acryl-based UV-curable resin | AC2-3 | 72 | 100 | Silicon oxynitride | 0.1 | 1800 |
| Test example 13 | PMMA | Acryl-based UV-curable resin | AC2-3 | 72 | 50 | Silicon oxynitride | 0.2 | 1200 |
| Test example 14 | PMMA | Acryl-based UV-curable resin | AC2-1 | 20 | 200 | Silicon oxynitride | 0.1 | 2000 |
| Test example 15 | PMMA | Acryl-based UV-curable resin | AC2-3 | 72 | 100 | Silicon oxynitride | 0.1 | 1800 |
| Test example 16 | PMMA | Acryl-based UV-curable resin | AC2-4 | 82 | 100 | Silicon oxynitride | 0.1 | 1500 |

**[Table 4]**

| | Barrier layer | | | | Appearance evaluation | | Moisture vapor permeability [g/m²/day] |
|---|---|---|---|---|---|---|---|
| | Ar [sccm] | O₂ [sccm] | N₂ [sccm] | Thickness [nm] | Immediately after film formation | After 1 day at 40°C 90% | |
| Test example 8 | 33 | 5 | 33 | 130 | A | A | 0.01 |
| Test example 9 | 43 | 19 | 43 | 50 | A | A | 0.03 |
| Test example 10 | 33 | 5 | 33 | 100 | A | A | 0.003 |
| Test example 11 | 20 | 7 | 44 | 20 | A | A | 0.07 |
| Test example 12 | 20 | 7 | 44 | 50 | A | A | 0.05 |
| Test example 13 | 45 | 8 | 18 | 70 | A | A | 0.007 |
| Test example 14 | 33 | 5 | 33 | 130 | B | B | 1.2 |
| Test example 15 | 20 | 7 | 44 | 160 | B | B | 0.18 |
| Test example 16 | 33 | 5 | 33 | 100 | A | B | 0.13 |

### <Explanation of Results>

In the laminates of Test Examples 8 to 13, the thickness of the barrier layer is 150 nm or less, the total thickness of the anchor coat layer and the barrier layer is 300 nm or less, and the tan δ peak temperature in the viscoelasticity measurement of the anchor coat layer is 80°C or less.

In the laminates, cracks and deformation due to residual stress due to the formation of the barrier layer are less likely to occur since the thickness of the barrier layer and the total thickness of the anchor coat layer and the barrier layer are in the above-mentioned ranges. Therefore, appearance thereof immediately after film formation is favorable.

Further, in the laminates, cracks due to expansion of the resin base in a moist heat environment are less likely to occur since the tan δ peak temperature in the viscoelasticity measurement of the anchor coat layer is in the above-mentioned range. Therefore, at 40°C and 90%, the appearance thereof after 1 day is also favorable.

### <Manufacturing Example 2>

The light guide plate for image display 8 of Manufacturing Example 2 is produced by performing the light guide plate production step in the same manner as in Manufacturing Example 1 using the laminate of Test Example 8.

### <<Test Examples and Manufacturing Examples of Third Embodiment>>

Hereinafter, the test examples and the manufacturing examples of the third embodiment will be described.

### <Test Example 17>

The materials for the resin base, the hard coat layer, and the barrier layer are the same as in Test Example 1 mentioned above.

As a material of the anchor coat layer, an anchor coat liquid 3-1 (indicated as "AC3-1" in Table 5, tan δ peak temperature: 78°C), in which an acryl-based resin 3-1 and an isocyanate compound are blended at a mass ratio of 10:1, is used.

After the base provision step is performed in the same manner as in Test Example 1, the barrier layer formation step described below is performed to produce the laminate.

### [Barrier Layer Formation Step]

In the barrier layer formation step, the barrier layer is formed on the surface of the hard coat layer through the anchor coat layer.

The anchor coat liquid 3-1 is applied to the surface of the hard coat layer using the bar coater and dried at 60°C for 1 minute to provide the anchor coat layer having a thickness of 200 nm.

Film formation of silicon oxynitride having a thickness of 100 nm is performed under the conditions shown in Tables 5 and 6 while oxygen gas, nitrogen gas, and argon gas are supplied by a reactive sputtering method using silicon (manufactured by Kojundo Chemical Laboratory Co., Ltd.) as a target.

By the above-mentioned operation, the laminate of Test Example 17 consisting of hard coat layer / resin base / hard coat layer / anchor coat layer (AC3-1, 200 nm) / barrier layer (silicon oxynitride, 100 nm) is obtained.

### <Test Example 18>

In Test Example 18, the material of the anchor coat layer is set as an anchor coat liquid 3-2 (indicated as "AC3-2" in Table 5, tan δ peak temperature: 56°C), in which the acryl-based resin 3-2 and the isocyanate compound are blended at a mass ratio of 10:1, and the laminate is produced in the same manner as in Test Example 17 except that the thickness of the anchor coat layer, the thickness of the barrier layer, and the film formation conditions are changed as shown in Tables 5 and 6.

That is, the laminate of Test Example 18 consists of hard coat layer / resin base / hard coat layer / anchor coat layer (AC3-2, 100 nm) / barrier layer (silicon oxynitride, 100 nm).

### <Test Example 19>

In Test Example 19, the laminate is produced in the same manner as in Test Example 18, except that the thickness of the anchor coat layer, the thickness of the barrier layer, and the film formation conditions are changed as shown in Tables 5 and 6.

That is, the laminate of Test Example 19 consists of hard coat layer / resin base / hard coat layer / anchor coat layer (AC3-2, 50 nm) / barrier layer (silicon oxynitride, 30 nm).

### <Test Example 20>

In Test Example 20, the material of the anchor coat layer is set as an anchor coat liquid 3-3 (indicated as "AC3-3" in Table 5, tan δ peak temperature: 32°C), in which the polyester-based resin 3-1 and the isocyanate compound are blended at a mass ratio of 10:1, and the laminate is produced in the same manner as in Test Example 17 except that the thickness of the anchor coat layer, the thickness of the barrier layer, and the film formation conditions are changed as shown in Tables 5 and 6.

That is, the laminate of Test Example 20 consists of hard coat layer / resin base / hard coat layer / anchor coat layer (AC3-3, 50 nm) / barrier layer (silicon oxynitride, 40 nm).

### <Test Example 21>

In Test Example 21, the material of the anchor coat layer is set as an anchor coat liquid 3 -4 (indicated as "AC3-4" in Table 5, tan δ peak temperature: 20°C), in which the polyester-based resin 3-2 and the isocyanate compound are blended at a mass ratio of 10:1, and the laminate is produced in the same manner as in Test Example 17 except that the thickness of the anchor coat layer, the thickness of the barrier layer, and the film formation conditions are changed as shown in Tables 5 and 6.

That is, the laminate of Test Example 21 consists of hard coat layer / resin base / hard coat layer / anchor coat layer (AC3-4, 25 nm) / barrier layer (silicon oxynitride, 130 nm).

### <Test Example 22>

In Test Example 22, the laminate is produced in the same manner as in Test Example 20, except that the thickness of the anchor coat layer, the thickness of the barrier layer, and the film formation conditions are changed as shown in Tables 5 and 6.

That is, the laminate of Test Example 22 consists of hard coat layer / resin base / hard coat layer / anchor coat layer (AC3-3, 100 nm) / barrier layer (silicon oxynitride, 210 nm).

### <Test Example 23>

In Test Example 23, the laminate is produced in the same manner as in Test Example 17, except that the thickness of the anchor coat layer, the thickness of the barrier layer, and the film formation conditions are changed as shown in Tables 5 and 6.

That is, the laminate of Test Example 23 consists of hard coat layer / resin base / hard coat layer / anchor coat layer (AC3-3, 100 nm) / barrier layer (silicon oxynitride, 40 nm).

Tables 5 and 6 show the material of the resin base, the material of the hard coat layer, the material of the anchor coat layer, the thickness of the anchor coat layer, the material of the barrier layer, the film formation pressure of the barrier layer, the electric power during film formation, the flow rates of Ar, O₂, and N₂, and the thickness of the barrier layer of the laminates of Test Examples 17 to 23.

### <Measurement and Evaluation Method>

The methods for measuring and evaluating various physical property values of laminates obtained in Test Examples 17 to 23 will be described.

### (Tan δ Peak Temperature)

The anchor coat liquids 3-1 to 3-4 of Test Examples 17 to 23 are dried at 80°C to produce sheets having a thickness of 200 µm.

The viscoelasticity measurement is performed on the produced sheet by using a dynamic viscoelasticity measurement device (DVA-200, manufactured by IT Instrument Control Co., Ltd.) under conditions of a frequency of 1 Hz, a temperature increase rate of 3°C/min, and a measurement temperature of -50 to 200°C. Thereby, the peak temperature [°C] of the loss tangent (tan δ) is obtained.

The column of the "tan δ peak temperature [°C]" of the "anchor coat layer" in Table 5 shows measured values of the peak temperature [°C] of the loss tangent (tan δ). Further, the column of "(A)/(B)" shows calculated values of "thickness [nm] of anchor coat layer / peak temperature [°C] of loss tangent (tan δ)".

### (Haze)

Regarding the laminates of Test Examples 17 to 23, by using a haze meter (NDH 7000II, manufactured by Nippon Denshoku Industries), the barrier layer side of the laminate is provided on the light source side, and the haze [%] is measured by the measurement method JIS (total ray transmittance: JIS K7361-1, haze: JIS7136).

Further, the laminates of Test Examples 17 to 23 are placed in the thermostat and humidistat device which is set under conditions of a temperature of 40°C and a relative humidity of 90%RH, and after 10 days, the haze [%] is measured in a similar manner.

Furthermore, regarding the laminates of Test Examples 17 to 23, the amount of change in haze (Δhaze) before and after storage is obtained.

The column of "Immediately after film formation" of "Haze [%]" in Table 6 shows measured values immediately after the formation of the barrier layer. The column of "40°C 90% after 10 days" shows measured values after 10 days from placing the laminate in the thermostat and humidistat device set under conditions of a temperature of 40°C and a relative humidity of 90%RH. Further, the column of "Δhaze" shows the amounts of change in haze before and after the storage.

### (Moisture Vapor Barrier Property)

By using the moisture vapor permeability measurement device (DELTAPERM, manufactured by Technolox), the barrier layer side of each laminate of Test Examples 17 to 23 is directed to be set on a detector side (the resin base side is a side exposed to moisture vapor), and the moisture vapor permeability [g/m²/day] is measured under the conditions of a temperature of 40°C and a relative humidity of 90%RH.

The column of "Moisture vapor permeability [g/m²/day]" in Table 6 shows measured values of the moisture vapor permeability.

**[Table 5]**

| | Resin base | Hard coat layer | Anchor coat layer | | | | Barrier layer | |
|---|---|---|---|---|---|---|---|---|
| | Material | Material | Material | Tan δ peak temperature [°C] (B) | Thickness [nm] (A) | (A)/(B) | Film formation pressure [Pa] | Electric Power [W] |
| Test example 17 | PMMA | Acryl-based UV-curable resin | AC3-1 | 78 | 200 | 2.6 | 0.12 | 2000 |
| Test example 18 | PMMA | Acryl-based UV-curable resin | AC3-2 | 56 | 100 | 1.8 | 0.12 | 1500 |
| Test example 19 | PMMA | Acryl-based UV-curable resin | AC3-2 | 56 | 50 | 0.9 | 0.05 | 1000 |
| Test example 20 | PMMA | Acryl-based UV-curable resin | AC3-3 | 32 | 50 | 1.6 | 0.10 | 2000 |
| Test example | PMMA | Acryl-based | AC3-4 | 20 | 25 | 1.3 | 0.12 | 2000 |
| 21 | | UV-curable resin | | | | | | |
| Test example 22 | PMMA | Acryl-based UV-curable resin | AC3-3 | 32 | 100 | 3.1 | 0.04 | 2000 |
| Test example 23 | PMMA | Acryl-based UV-curable resin | AC3-3 | 32 | 100 | 3.1 | 0.09 | 1500 |

**[Table 6]**

| | Barrier layer | | | | Haze [%] | | | Moisture vapor permeability [g/m²/day] |
|---|---|---|---|---|---|---|---|---|
| | Ar [sccm] | O₂ [sccm] | N₂ [sccm] | Thickness [nm] | Immediately after film formation | After 10 days at 40°C 90% | Δhaze | |
| Test example 17 | 33 | 5 | 33 | 100 | 0.04 | 0.03 | -0.01 | 0.005 |
| Test example 18 | 33 | 5 | 33 | 100 | 0.04 | 0.21 | 0.17 | 0.002 |
| Test example 19 | 16 | 2 | 16 | 30 | 0.06 | 0.08 | 0.02 | 0.006 |
| Test example 20 | 23 | 23 | 23 | 40 | 0.07 | 0.08 | 0.01 | 0.008 |
| Test example 21 | 33 | 5 | 33 | 130 | 0.06 | 0.05 | -0.01 | 0.003 |
| Test example 22 | 16 | 2 | 16 | 210 | 0.10 | 2.80 | 2.70 | 1.1 |
| Test example 23 | 20 | 7 | 44 | 40 | 0.04 | 2.55 | 2.51 | 0.26 |

### <Explanation of Results>

In the laminates of Test Examples 17 to 21, the anchor coat layer thickness [nm] / tan δ peak temperature [°C] is 3 or less. Therefore, even after 10 days at 40°C 90%, the residual stress of the barrier layer Since deformation is suppressed, and thus optical characteristics do not deteriorate. Since the laminates have low moisture vapor permeabilities, the laminates are highly effective in preventing deterioration due to the hologram layer.

### <Manufacturing Example 3>

The light guide plate for image display 8 of Manufacturing Example 3 is produced by performing the light guide plate production step in the same manner as in Manufacturing Example 1 using the laminate of Test Example 17.

### <<Test Examples and Manufacturing Examples of Fourth Embodiment>>

Hereinafter, the test examples and the manufacturing examples of the fourth embodiment will be described.

### <Test Example 24>

The materials for the resin base, the hard coat layer, and the barrier layer are the same as in Test Example 1 mentioned above.

As the material of the anchor coat layer, the anchor coat liquid 4-1 (indicated as "AC4-1" in Table 7) is used, in which a polyester-based resin 4-1 (trade name "Vylon 63SS", manufactured by Toyobo Co., Ltd., hydroxyl value: 5 mgKOH/g) and an isocyanate compound 4-1 (trade name "Coronate HX" manufactured by Tosoh Corp., isocyanurate structure trimer of hexamethylene diisocyanate) are blended such that NCO (number of isocyanate groups of isocyanate compound 4-1) / OH (number of hydroxyl groups of polyester-based resin 4-1) = 1 (molar ratio).

After the base provision step is performed in the same manner as in Test Example 1, the barrier layer formation step described below is performed to produce the laminate.

### [Barrier Layer Formation Step]

In the barrier layer formation step, the barrier layer is formed on the surface of the hard coat layer through the anchor coat layer.

The anchor coat liquid 4-1 is applied to the surface of the hard coat layer using a bar coater and dried at 60°C for 1 minute to provide an anchor coat layer having a thickness of 25 nm.

Film formation of silicon oxynitride having a thickness of 130 nm is performed under the conditions shown in Table 7 while oxygen gas, nitrogen gas, and argon gas are supplied by a reactive sputtering method using silicon (manufactured by Kojundo Chemical Laboratory Co., Ltd.) as a target.

By the above-mentioned operations, the laminate of Test Example 24 consisting of hard coat layer / resin base / hard coat layer / anchor coat layer (AC4-1, 25 nm) / barrier layer (silicon oxynitride, 130 nm) is obtained.

### <Test Example 25>

In Test Example 25, the laminate is produced in the same manner as in Test Example 24 except that the material of the anchor coat layer is an anchor coat liquid 4-2 (indicated as "AC4-2" in Table 7) in which an acryl-based resin 4-1 (trade name "Acryt 6AN-6000", manufactured by Taisei Fine Chemical Co., Ltd., hydroxyl value: 108 mgKOH/g) and an isocyanate compound 4-1 are blended such that NCO (number of isocyanate groups of isocyanate compound 4-1) / OH (number of hydroxyl groups of acryl-based resin 4-1) = 1 (molar ratio), the thickness of the anchor coat layer is set to 150 nm, and the thickness of the barrier layer and the film formation conditions are changed as shown in Table 7.

That is, the laminate of Test Example 25 consists of hard coat layer / resin base / hard coat layer / anchor coat layer (AC4-2, 150 nm) / barrier layer (silicon oxynitride, 100 nm).

### <Test Example 26>

In Test Example 26, the laminate is produced in the same manner as in Test Example 24 except that the material of the anchor coat layer is an anchor coat liquid 4-3 (indicated as "AC4-3" in Table 7) in which an acryl-based resin 4-2 (trade name "Acryt 6BF-400" manufactured by Taisei Fine Chemical Co., Ltd., hydroxyl value: 59 mgKOH/g) and the isocyanate compound 4-1 are blended such that NCO (the number of isocyanate groups of isocyanate compound 4-1) / OH (the number of hydroxyl groups of acryl-based resin 4-2) = 1 (molar ratio), the thickness of the anchor coat layer is set to 100 nm, and the thickness of the barrier layer and the film formation conditions are changed as shown in Table 7.

That is, the laminate of Test Example 26 consists of hard coat layer / resin base / hard coat layer / anchor coat layer (AC4-3, 100 nm) / barrier layer (silicon oxynitride, 100 nm).

### <Test Example 27>

In Test Example 27, the laminate is produced in the same manner as in Test Example 24, except that the material of the anchor coat layer is an anchor coat liquid 4-4 (indicated as "AC4-4" in Table 7) in which the acryl-based resin 4-1 and the isocyanate compound 4-1 are blended such that NCO (number of isocyanate groups of isocyanate compound 4-1) / OH (number of hydroxyl groups of acryl-based resin 4-1) = 0.5 (molar ratio), and the thickness and film formation conditions of the barrier layer are changed as shown in Table 7.

That is, the laminate of Test Example 27 consists of hard coat layer / resin base / hard coat layer / anchor coat layer (AC4-4, 25 nm) / barrier layer (silicon oxynitride, 100 nm).

### <Test Example 28>

In Test Example 28, the laminate is produced in the same manner as in Test Example 24, except that the material of the anchor coat layer is an anchor coat liquid 4-5 (indicated as "AC4-5" in Table 7) in which the acryl-based resin 4-1 and the isocyanate compound 4-1 are blended such that NCO (number of isocyanate groups of isocyanate compound 4-1) / OH (number of hydroxyl groups of acryl-based resin 4-1) = 0.75 (molar ratio), and the thickness and film formation conditions of the barrier layer are changed as shown in Table 7.

That is, the laminate of Test Example 28 consists of hard coat layer / resin base / hard coat layer / anchor coat layer (AC4-5, 25 nm) / barrier layer (silicon oxynitride, 100 nm).

Table 7 shows materials of the resin base (resin base material), materials of the hard coat layer (hard coat layer material), materials of the anchor coat layer (AC layer material), and molar ratios of the isocyanate group of the isocyanate compound to the hydroxyl group of the binder resin of the anchor coat layer (NCO/OH), film formation pressures of the barrier layer (film formation pressure[Pa]), electric power during film formation (electric power[W]), flow rates of Ar (Ar [sccm]), flow rates of O₂ (O₂ [sccm]), flow rates of N₂ (N₂ [sccm]), and thicknesses of the barrier layer (thickness [nm]) of the laminates of Test Examples 24 to 28.

### <Measurement and Evaluation Method>

The methods for measuring and evaluating various physical property values of laminates obtained in Test Examples 24 to 28 will be described.

### (Elemental Formulation of Barrier Layer)

Regarding the laminates of Test Examples 24 to 28, by using an X-ray photoelectron spectrometer (K-Alpha, manufactured by Thermo Fisher Scientific Corp.), the binding energy is measured by the X-ray photoelectron spectroscopy (XPS), and is converted from areas of the peaks corresponding to Si2P, O1S, N1S, and C1S. Thereby, each elemental formulation [atm%] is calculated.

The measured values of the elemental formulations [atm%] are shown in the columns of "Si [atm%]", "O [atm%]", "N [atm%]", and "C [atm%]" of "barrier layer formulations" in Table 8.

### (Solvent Resistance)

A solvent resistance test is performed by using a friction fastness tester RT-300 manufactured by Daiei Kagaku Seiki Seisakusho. A flat test stand is provided in the tester, and the laminates of Test Examples 24 to 28 are cut into strips of 2 cm in width and 20 cm in length, and the strips are set on the test stand with the barrier layer facing upward. A piece of wiping cloth (N2325 manufactured by Hashimoto Cloth Co., Ltd.) is set so as to cover the friction surface of the friction element of the tester, and a load weight of 800 g is provided on the friction element (total load of 1 kg of 200 g of friction element and 800 g of weight). Isopropyl alcohol (IPA) is dropped on the barrier layer surface of the strip-shaped laminate, the friction element is lowered onto the barrier layer surface, and the barrier layer surface is reciprocated 10 times. Thereafter, the barrier layer surface is observed with a scanning white light interference microscope VertScan manufactured by Hitachi High-Tech Science, and the solvent resistance is evaluated in accordance with the following criteria.
A (good): peeling of the barrier layer is not observed.
B (poor): peeling of the barrier layer is observed.

The column of the "solvent resistance" in Table 8 shows evaluation results.

### (Moisture Vapor Barrier Property)

By using the moisture vapor permeability measurement device (DELTAPERM, manufactured by Technolox), the barrier layer side of each laminate of Test Examples 24 to 28 is directed to be set on a detector side (the resin base side is a side exposed to moisture vapor), and the moisture vapor permeability [g/m²/day] is measured under the conditions of a temperature of 40°C and a relative humidity of 90%RH.

The column of "Moisture vapor permeability [g/m²/day]" in Table 8 shows measured values of the moisture vapor permeability.

**[Table 7]**

| | Resin base | Hard coat layer | Anchor coat layer | | Barrier layer | | | | | |
|---|---|---|---|---|---|---|---|---|---|---|
| | Material | Material | Material | NCO/OH | Film formation pressure [Pa] | Electric Power [W] | Ar [sccm] | O₂ [sccm] | N₂ [sccm] | Thickness [nm] |
| Test example 24 | PMMA | Acryl-based UV-curable resin | AC4-1 | 1 | 0.12 | 2000 | 33 | 5 | 33 | 130 |
| Test example 25 | PMMA | Acryl-based UV-curable resin | AC4-2 | 1 | 0.12 | 1800 | 33 | 5 | 33 | 100 |
| Test example 26 | PMMA | Acryl-based UV-curable resin | AC4-3 | 1 | 0.12 | 1500 | 33 | 5 | 33 | 100 |
| Test example 27 | PMMA | Acryl-based UV-curable resin | AC4-4 | 0.5 | 0.12 | 1700 | 33 | 6 | 32 | 100 |
| Test example 28 | PMMA | Acryl-based UV-curable resin | AC4-5 | 0.75 | 0.13 | 1300 | 36 | 5 | 30 | 100 |

**[Table 8]**

| | Barrier layer | | | | Solvent Resistance | Moisture vapor permeability [g/m²/day] |
|---|---|---|---|---|---|---|
| | Si [atm%] | O [atm%] | N [atm%] | C [atm%] | | |
| Test example 24 | 38.6 | 45.1 | 150 | 1.3 | A | 0.003 |
| Test example 25 | 40.3 | 46.9 | 11.3 | 1.5 | A | 0.004 |
| Test example 26 | 40.0 | 49.6 | 9.2 | 1.2 | A | 0.003 |
| Test example 27 | 40.1 | 50.9 | 7.8 | 1.2 | B | 0.004 |
| Test example 28 | 39.9 | 53.1 | 5.8 | 1.2 | B | 0.004 |

### <Explanation of Results>

In the laminates of Test Examples 24 to 26, since the NCO/OH ratio of the anchor coat layer is 0.8 or greater, the cross-link density of the anchor coat layer is high and the resistance to solvents is high. Therefore, peeling of the barrier layer during the solvent resistance test can be suppressed. Since the laminates have low moisture vapor permeabilities, the laminates are highly effective in preventing deterioration due to the hologram layer.

### <Manufacturing Example 4>

The light guide plate for image display 8 of Manufacturing Example 4 is produced by performing the light guide plate production step in the same manner as in Manufacturing Example 1 using the laminate of Test Example 24.

### <<Test Examples and Manufacturing Examples of Fifth Embodiment>>

Hereinafter, the test examples and the manufacturing examples of the fifth embodiment will be described.

### <Test Example 29>

### (Manufacturing of Resin Base A-1)

The acryl-based resin (manufactured by Arkema, trade name "Altuglas HT121", matrix resin: methyl methacrylate-methyl acrylate-styrene copolymer, hardness disperse phase: TMPTA-TMPTMA polymerization cross-linked resin, hardness disperse phase diameter: 5 to 10 µm) is used as the resin composition a-1 as it is.

The resin composition a-1 is supplied to an extruder A, melt-kneaded in the extruder at 240°C, supplied to a T die for single layer heated to 250°C, extruded onto a sheet, and cooled and solidified to obtain a resin base A-1 having a thickness of 0.5 mm.

### (Manufacturing of Protective Layer E-1)

The resin base A-1 is cut into a rectangular shape of 200 mm × 300 mm, and a protective layer E-1 is formed on one surface of the resin base A-1 through the adhesive layer D-1 by the following operation to obtain a laminate consisting of resin base A-1 / adhesive layer D-1 / protective layer E-1.

An ethyl acetate solution of the acryl-based resin (manufactured by Taisei Fine Chemical Co., Ltd., trade name "Acryt 6BF-400"), which is a material of the adhesive layer D-1, is applied to one surface of the resin base A-1 with a bar coater, and dried at 60°C for 1 minute to produce an adhesive layer D-1 with a thickness of 100 nm. Further, the protective layer E-1, which is formed of silicon nitrogen oxide and has a thickness of 100 nm, is produced on the surface of the adhesive layer D-1, by the reactive sputtering method. The reactive sputtering method is performed using silicon as a target under a vacuum of 1.0×10⁻¹ Pa while oxygen gas, nitrogen gas, and argon gas are supplied. It should be noted that the total gas flow rate at this time is set to 70 sccm.

Table 9 shows materials and thicknesses of the resin base, the adhesive layer, and the protective layer.

### (Measurement and Evaluation)

Table 10 shows the pencil hardness of the resin base surface, the surface roughness of the resin base, the surface roughness of the protective layer, and the moisture vapor barrier properties of the laminate consisting of resin base A-2 / protective layer E-1.

### <Test Example 30>

### (Manufacturing of Resin Base A-1/B-1/A-1)

In Test Example 30, the resin base A-1 and the resin base B-1 are laminated in the order of A-1/B-1/A-1 to be used as the resin base.

The resin composition a-1 of Test Example 29 is used as the material of the resin base A-1.

The material of the resin base B-1 employs a resin composition b-1 which is obtained by mixing a pellet of a polycarbonate-based resin A (manufactured by Sumika Styron Co., Ltd., trade name "CALIBRE301-4"), a pellet of a polycarbonate-based resin B (manufactured by Sumika Styron Co., Ltd., trade name "SD Polyca SP3030"), and a pellet of a polyester-based resin (manufactured by SK Chemicals, trade name "SKYGREEN J2003 "), at a mass ratio of 55:25:20, and then by pelletizing the mixture through a two-shaft extruder heated to 260°C.

The resin composition a-1 and the resin composition b-1 are supplied to extruders A and B, respectively, melt-kneaded at 240°C and 260°C in the respective extruders, then combined with two types of T dies for three layers heated to 250°C, extruded onto a sheet so as to have a configuration of A-1/B-1/A-1, and cooled and solidified to produce a resin base A-1/B-1/A-1 having a thickness of 0.8 mm (A-1: 100 µm, B-1: 600 µm).

### (Manufacturing of Protective Layer E-1)

The resin base A-1B-1/A-1 is cut into a rectangular shape of 200 mm × 300 mm, and the protective layer E-1 is produced on one resin base A-1 through the adhesive layer D-1 in the same manner as in Example 1 to obtain a laminate consisting of resin base A-1/B-1/A-1 / adhesive layer D-1 / protective layer E-1.

Table 9 shows materials and thicknesses of the resin base, the adhesive layer, and the protective layer.

### (Measurement and Evaluation)

Table 10 shows the pencil hardness of the resin base surface, the surface roughness of the resin base, the surface roughness of the protective layer, and the moisture vapor barrier properties of the laminate consisting of resin base A-1/B-1/A-1 / adhesive layer D-1 / protective layer E-1.

### <Test Example 31>

### (Manufacturing of Hard Coat Layer C-1 / Resin Base A-1 / Hard Coat Layer C-1)

In Test Example 31, hard coat layers C-1 are laminated on both surfaces of the resin base A-1.

The resin composition a-1 of Test Example 29 is used as the material of the resin base A-1.

The material of the hard coat layer C-1 employs an ultraviolet-curable resin composition c-1 which is dissolved and diluted with propylene glycol monomethyl ether (PGM) such that the solid content of the mixture is 40% by mass by mixing 4 parts by mass of a photopolymerization initiator A (manufactured by BASF, trade name "Omnirad 184") and 0.5 parts by mass of the leveling agent A (manufactured by Kyoeisha Chemical Co., Ltd., trade name "Polyflow No. 75") with respect to 100 parts by mass of the ultraviolet-curable resin composition A (manufactured by Mitsubishi Chemical Corp., trade name "Shikou UV1700B").

The ultraviolet-curable resin composition c-1 is applied on both surfaces of the resin base A-1 with a bar coater and dried at 90°C for 1 minute, and then both surfaces are exposed with an integrated light amount of 500 mJ/cm² to provide the hard coat layers C-1 each having a thickness of 10 µm. As a result, the hard coat layer C-1 / resin base A-1 / hard coat layer C-1 is obtained.

### (Manufacturing of Protective Layer E-1)

The hard coat layer C-1 / resin base A-1 / hard coat layer C-1 is cut into a rectangular shape of 200 mm × 300 mm, and a protective layer E-1 is produced on one hard coat layer C-1 through the adhesive layer D-1 in the same manner as in Example 1 to obtain a laminate consisting of hard coat layer C-1 / resin base A-1 / hard coat layer C-1 / adhesive layer D-1 / protective layer E-1.

Table 9 shows materials and thicknesses of the resin base, the hard coat layer, the adhesive layer, and the protective layer.

### (Measurement and Evaluation)

Table 10 shows the pencil hardness of the resin base surface, the surface roughness of the resin base, the surface roughness of the protective layer, and the moisture vapor barrier properties of the laminate consisting of hard coat layer C-1 / resin base A-1 / hard coat layer C-1 / adhesive layer D-1 / protective layer E-1.

### <Test Example 32>

### (Manufacturing of Hard Coat Layer C-2 / Resin Base A-1/B-1/A-1 / Hard Coat Layer C-2)

In Test Example 32, the resin bases A-1 and the resin base B-1 are laminated in the order of A-1/B-1/A-1, and the hard coat layers C-2 are laminated on both surfaces thereof.

The same resin base A-1/B-1/A-1 as in Test Example 30 is used.

The material of the hard coat layer C-2 employs a UV-curable resin composition c-2 which is dissolved and diluted with propylene glycol monomethyl ether (PGM) such that the solid content of the mixture is 40% by mass by mixing the ultraviolet-curable resin composition A (manufactured by Mitsubishi Chemical Corp., trade name "Shikou UV1700B") and the reactive functional group-contained silica dispersion (manufactured by Nissan Chemical Co., Ltd., trade name "Organo silica sol PGM-AC-2140Y") such that curable resin: silica = 50: 50 mass ratio and by mixing 4 parts by mass of the photopolymerization initiator A (manufactured by BASF Corp., trade name "Omnirad 184") and 0.5 parts by mass of the leveling agent A (manufactured by Kyoeisha Chemical Co., Ltd., trade name "Polyflow No. 75") with respect to 100 parts by mass of the solid content of the mixture.

The ultraviolet-curable resin composition c-2 is applied on both surfaces of the resin base A-1B-1/A-1 with a bar coater and dried at 90°C for 1 minute, and then both surfaces are exposed with an integrated light amount of 500 mJ/cm² to provide the hard coat layers C-2 each having a thickness of 15 µm. As a result, the hard coat layer C-2 / resin base A-1/13-1/A-1 / hard coat layer C-2 is obtained.

### (Manufacturing of Protective Layer E-1)

The hard coat layer C-2 / resin base A-1/B-1/A-1 / hard coat layer C-2 is cut into a rectangular shape of 200 mm × 300 mm, and the protective layer E-1 is produced on one hard coat layer C-2 through the adhesive layer D-1 in the same manner as in Test Example 29 to obtain a laminate consisting of hard coat layer C-2 / resin base A-1B-1/A-1 / hard coat layer C-2 / adhesive layer D-1 / protective layer E-1.

Table 9 shows materials and thicknesses of the resin base, the hard coat layer, the adhesive layer, and the protective layer.

### (Measurement and Evaluation)

Table 10 shows the pencil hardness of the resin base surface, the surface roughness of the resin base, the surface roughness of the protective layer, and the moisture vapor barrier properties of the laminate consisting of hard coat layer C-2 / resin base A-1B-1/A-1 / hard coat layer C-2 / adhesive layer D-1 / protective layer E-1.

### <Test Example 33>

### (Manufacturing of Resin Base A-2)

An acryl-based resin plate having a thickness of 1.5 mm (manufactured by Mitsubishi Chemical Corp., trade name "Acrylite L") is used as the resin base A-2.

### (Manufacturing of Protective Layer E-1)

The resin base A-2 is cut into a rectangular shape of 200 mm × 300 mm, and a protective layer E-1 is formed on one surface of the resin base A-2 through the adhesive layer D-1 in the same manner as in Test Example 29 to obtain a laminate consisting of resin base A-2 / adhesive layer D-1 / protective layer E-1.

Table 9 shows materials and thicknesses of the resin base, the adhesive layer, and the protective layer.

### (Measurement and Evaluation)

Table 10 shows the pencil hardness of the resin base surface, the surface roughness of the resin base, the surface roughness of the protective layer, and the moisture vapor barrier properties of the laminate consisting of resin base A-2 / adhesive layer D-1 / protective layer E-1.

### <Test Example 34>

### (Creation of Resin Base A-2)

An acryl-based resin plate having a thickness of 1.5 mm (manufactured by Mitsubishi Chemical Corp., trade name "Acrylite L") is used as the resin base A-2.

### (Manufacturing of Protective Layer E-1)

The resin base A-2 is cut into a rectangular shape of 200 mm × 300 mm, and a protective layer E-1 is formed on one surface of the resin base A-2 by the following operation to obtain a laminate consisting of resin base A-2 / protective layer E-1.

Further, the protective layer E-1, which is formed of silicon nitrogen oxide and has a thickness of 100 nm, is produced on one surface of the resin base A-2, by the reactive sputtering method. The reactive sputtering method is performed using silicon as a target under a vacuum of 1.0×10⁻¹ Pa while oxygen gas, nitrogen gas, and argon gas are supplied. It should be noted that the total gas flow rate at this time is set to 70 sccm.

Table 9 shows materials and thicknesses of the resin base and the protective layer.

### (Measurement and Evaluation)

Table 10 shows the pencil hardness of the resin base surface, the surface roughness of the resin base, the surface roughness of the protective layer, and the moisture vapor barrier properties of the laminate consisting of resin base A-2 / protective layer E-1.

### <Measurement and Evaluation Method>

The methods for measuring and evaluating various physical property values of laminates obtained in Test Examples 29 to 34 will be described.

### (Pencil Hardness of Resin Base Surface)

The pencil hardness of the surface of the resin base obtained in each of Test Examples 29 to 34 opposite to the side facing the protective layer is measured in accordance with JIS K 5600-5-4:1999. The applied load during the test is set to 750 gf.

### (Surface Roughness Sa)

The surface roughness Sa of the resin bases used in each of Test Examples 29 to 34 and the surface roughness Sa of the side of the protective layer in contact with the hologram layer (surface roughness Sa of the protective layer) are measured using VertScan.
Device: VertScan (manufactured by Ryoka System Co., Ltd.)
Observation condition
Objective lens: 5x
Wavelength filter: 530 white
Measurement mode: wave
Size of field of view: 640×480 pixels
Scan range: 7 µm (start)
-7 µm (stop)
Lamp aperture stop: 50%
Contrast: 62%
Brightness: 0%
Analysis condition
Interpolation: full
Surface correction: Quaternary approximation

### (Moisture Vapor Barrier Property)

The moisture vapor barrier properties of the laminates of Test Examples 29 to 34 are measured using the moisture vapor permeability measurement device (DELTAPERM, manufactured by Technolox).

The protective layer side of the laminate is set to face the detector side (the resin base side faces the moisture vapor exposure side), and measurement is performed under the conditions of a temperature of 40°C and a relative humidity of 90%RH.

**[Table 9]**

| | Resin base | | Hard coat layer | | Adhesive layer | | Protective layer | |
|---|---|---|---|---|---|---|---|---|
| | Material | Thickness [mm] | Material | Thickness [µm] | Material | Thickness [µm] | Material | Thickness [µm] |
| Test example 29 | A-1 | 0.5 | - | - | D-1 | 3 | E-1 | 50 |
| Test example 30 | A-1/B-1/ A-1 | 0.1/0.6/ 0.1 | - | - | D-1 | 3 | E-1 | 50 |
| Test example 31 | A-1 | 0.5 | C-1 | 10 | D-1 | 3 | E-1 | 50 |
| Test example 32 | A-1/B-1/ A-1 | 0.1/0.6/ 0.1 | C-2 | 15 | D-1 | 3 | E-1 | 50 |
| Test example 33 | A-2 | 1.5 | - | - | D-1 | 3 | E-1 | 50 |
| Test example 34 | A-2 | 1.5 | - | - | - | - | E-1 | 50 |

**[Table 10]**

| | Pencil hardness of resin base surface | Surface roughness Sa of resin base [nm] | Surface roughness Sa of protective layer [nm] | Moisture vapor barrier property [g/m²·day] |
|---|---|---|---|---|
| Test example 29 | 4H | 2.3 | 4.1 | 0.08 |
| Test example 30 | 4H | 2.2 | 4.0 | 0.1 |
| Test example 31 | 6H | 1.2 | 3.3 | 0.05 |
| Test example 32 | 7H | 1.1 | 3.8 | 004 |
| Test example 33 | 2H | 4.0 | 50 | 0.1 |
| Test example 34 | 2H | 4.0 | 5.5 | 2 |

### <Explanation of Results>

In the laminates of Test Examples 29 to 33, the surface roughness Sa of the protective layer is less than 5.5 nm, and the moisture vapor barrier property is improved. Among them, when comparing Test Example 29 and Test Example 33, the laminate of Test Example 29 uses a resin layer (A) including a hard resin (a) having a hardness disperse phase in the matrix as a resin base. Therefore, the surface roughness Sa of the resin base is smaller, and the surface roughness Sa of the protective layer is also smaller. Thereby, the moisture vapor barrier property is further improved.

Further, the laminate of each of Test Examples 29 to 32 has higher pencil hardness on the surface of the resin base than the laminate of Test Example 33, and thus has excellent scratch resistance.

### <Manufacturing Example 5>

The light guide plate for image display 8 of Manufacturing Example 5 is produced by performing the light guide plate production step in the same manner as in Manufacturing Example 1 using the laminate of Test Example 29.

### <<Test Examples and Manufacturing Examples of Sixth Embodiment>>

Hereinafter, the test examples and the manufacturing examples of the sixth embodiment will be described.

### <Test Example 3 5>

The materials for the resin base, the hard coat layer, and the barrier layer are the same as in Test Example 1 mentioned above.

As a material of the anchor coat layer, the acryl-based resin ("Acryt 6BF-400" manufactured by Taisei Fine Chemical Co., Ltd.) is used.

After the base provision step is performed in the same manner as in Test Example 1, the barrier layer formation step described below is performed to produce the laminate.

### [Barrier Layer Formation Step]

In the barrier layer formation step, the barrier layer is formed on the surface of the hard coat layer through the anchor coat layer.

The acryl-based resin, which is a material of the anchor coat layer, is applied to the surface of the hard coat layer using a bar coater and dried at 60°C for 1 minute to provide the anchor coat layer having a thickness of 100 nm.

Film formation of the silicon nitrogen oxide having a thickness of 100 nm is performed under a vacuum of 1.0×10⁻¹ Pa while oxygen gas, nitrogen gas, and argon gas are supplied by a reactive sputtering method using silicon (manufactured by Kojundo Chemical Laboratory Co., Ltd.) as a target. The total gas flow rate is 70 sccm.

### <Test Example 36>

In Test Example 36, the laminate is produced in the same manner as in Test Example 35, except that the total gas flow rate during formation of the barrier layer is set to 105 sccm.

### <Test Example 37>

In Test Example 37, the laminate is produced in the same manner as in Test Example 35 except that the material of the anchor coat layer is a urethane-based resin ("Vylon UR-1350" manufactured by Toyobo Co., Ltd.).

### <Test Example 3 8>

In Test Example 38, the laminate is produced in the same manner as in Test Example 37, except that the total gas flow rate during formation of the barrier layer is set to 105 sccm.

### <Test Example 39>

In Test Example 39, the laminate is produced in the same manner as in Test Example 37 except that the drying temperature of the anchor coat layer is set to 40°C.

### <Test Example 40>

In Test Example 40, the laminate is produced in the same manner as in Test Example 35 except that the material of the anchor coat layer is a polyester-based resin ("Vylon 63 SS" manufactured by Toyobo Co., Ltd.).

### <Test Example 41>

In Test Example 41, the laminate is produced in the same manner as in Test Example 40, except that the total gas flow rate during formation of the barrier layer is set to 105 sccm.

### <Test Example 42>

In Test Example 42, the laminate is produced in the same manner as in Test Example 40, except that the anchor coat layer is dried at 40°C.

### <Test Example 43>

In Test Example 43, the laminate is produced in the same manner as in Test Example 35, except that the drying temperature of the anchor coat layer is set to 40°C.

Tables 11 and 12 show the material and the plate thickness of the resin base of each of Test Examples 35 to 43, the material of the hard coat layer, the material of the anchor coat layer, the film thickness and the drying temperature, and the material, the film thickness, the total gas flow rate during film formation, and arrangement of the barrier layer.

### <Measurement and Evaluation Method>

The methods for measuring and evaluating various physical property values of laminates obtained in Test Examples 35 to 43 will be described.

### (Measurement of Surface Roughness Sa)

Using the laminates of Test Examples 35 to 43 as measurement samples, the surface roughness Sa is measured by the vert scan method.
Device: White interferometer (VertScan, manufactured by Ryoka System Co., Ltd.)
Observation condition
Objective lens: 5x
Wavelength filter: 530 white
Measurement mode: wave
Size of field of view: 640×480 pixels
Scan range: 7 µm (start)
-7 µm (stop)
Lamp aperture stop: 50%
Contrast: 62%
Brightness: 0%
Analysis condition
Interpolation: full
Surface correction: Quaternary approximation

The column of "Surface Roughness Sa" in Table 12 shows measurement results of Test Examples 35 to 43.

### (Measurement of Specular Glossiness)

Using the laminates of Test Examples 35 to 43 as measurement samples, a gloss meter (manufactured by Suga Test Instruments Co., Ltd., product name: GS-4K) is used to measure a specular glossiness in a state where a light source incidence angle is set to 60 degrees and a light-receiving angle of a photoreceiver is set to 60 degrees. It should be noted that, ahead of the measurement, the device is calibrated such that a specular glossiness of black flat optically polished glass No. 2012-015-B, which is a gloss standard plate, is 92.2%.

The column of "Specular glossiness" in Table 12 shows measurement results of Test Examples 35 to 43.

### (Measurement of Transmission b* Value)

The laminates of Test Examples 35 to 43 are used as measurement samples, and the transmission b* value is measured using a spectroscopic colorimeter "SD6000" manufactured by Nippon Denshoku Industries Co., Ltd. with a light source of C and at a viewing angle of 2 degrees.

The column of "transmission b* value" in Table 12 shows measurement results of Test Examples 35 to 43.

**[Table 11]**

| | Resin base | | Hard coat layer | Anchor coat layer | | |
|---|---|---|---|---|---|---|
| | Material | Plate thickness [mm] | Material | Material | Film thickness [nm] | Drying temperature [°C] |
| Test example 35 | Acrylic resin | 1 | Acryl-based UV-curable resin | Acryl-based | 100 | 60 |
| Test example 36 | Acrylic resin | 1 | Acryl-based UV-curable resin | Acryl-based | 100 | 60 |
| Test example 37 | Acrylic resin | 1 | Acryl-based UV-curable resin | Urethane-based | 100 | 60 |
| Test example 38 | Acrylic resin | 1 | Acryl-based UV-curable resin | Urethane-based | 100 | 60 |
| Test example 39 | Acrylic resin | 1 | Acryl-based UV-curable resin | Urethane-based | 100 | 40 |
| Test example 40 | Acrylic resin | 1 | Acryl-based UV-curable resin | Polyester-based | 100 | 60 |
| Test example 41 | Acrylic resin | 1 | Acryl-based UV-curable resin | Polyester-based | 100 | 60 |
| Test example 42 | Acrylic resin | 1 | Acryl-based UV-curable resin | Polyester-based | 100 | 40 |
| Test example 43 | Acrylic resin | 1 | Acryl-based UV-curable resin | Acryl-based | 100 | 40 |

**[Table 12]**

| | Barrier layer | | | | Evaluation result | | |
|---|---|---|---|---|---|---|---|
| | Material | Film thickness [nm] | Total gas flow rate [sccm] | Arrangement | Surface roughness Sa [nm] | Specular glossiness | Transmission b* value |
| Test example 35 | Silicon oxide | 100 | 70 | Surface layer of hologram layer | 1.1 | 150% | 0.14 |
| Test example 36 | Silicon oxide | 100 | 105 | Surface layer of hologram layer | 1.2 | 120% | 0.31 |
| Test example 37 | Silicon oxide | 100 | 70 | Surface layer of hologram layer | 1.0 | 162% | 0.30 |
| Test example 38 | Silicon oxide | 100 | 105 | Surface layer of hologram layer | 1.2 | 153% | 0.14 |
| Test example 39 | Silicon oxide | 100 | 70 | Surface layer of hologram layer | 1.2 | 156% | 0.38 |
| Test example 40 | Silicon oxide | 100 | 70 | Surface layer of hologram layer | 1.1 | 175% | 0.01 |
| Test example 41 | Silicon oxide | 100 | 105 | Surface layer of hologram layer | 1.0 | 151% | 0.03 |
| Test example 42 | Silicon oxide | 100 | 70 | Surface layer of hologram layer | 1.1 | 150% | 0.20 |
| Test example 43 | Silicon oxide | 100 | 70 | Surface layer of hologram layer | 1.2 | 100% | 0.95 |

### <Explanation of Results>

The laminates of Test Examples 35 to 42 each have a specular glossiness of 120% or greater. It can be seen that each of the laminates also has a low yellowness due to the low transmission b* thereof.

On the other hand, the laminate of Test Example 43 has a specular glossiness of 100% by using an acryl-based resin as the anchor coat layer and setting the drying temperature of the anchor coat layer to 40°C. It can be seen that the laminate of Test Example 43 has a high transmission b* and a strong yellowness.

In Test Example 43, the acryl-based resin used as the anchor coat layer is not sufficiently cured under the drying conditions of 40°C for 1 minute, and the anchor coat layer is cured while being shaped during the sputtering film formation of the barrier layer. Therefore, it is considered that the film formation unevenness occurs inside the film, and the specular glossiness is lowered.

### <Manufacturing Examples 6 to 14>

The light guide plates for image display 8 of Manufacturing Examples 6 to 14 are produced by performing the light guide plate production step in the same manner as in Manufacturing Example 1 using the laminates of Test Examples 35 to 43.

### <Evaluation of Sharpness of Displayed Image>

The light guide plates for image display of Manufacturing Examples 6 to 14 are provided on an image display device. The image display device is provided with an optical system that makes the image light to be displayed incident on the incidence portion of the light guide plate for image display 8, a drive power supply, and a circuit system that supplies image information for obtaining the image light.

As the input image used for the evaluation, a white image and a text display image are used.

The evaluation is performed by visually determining the appearance of the white image and the text display image. As a text image, "ABCDE" having a size of 10 mm × 100 mm or less is displayed.

When a rainbow color is not visible in the white image and the text is clearly visible in the text display image, it is determined that the result is favorable (good, described as "A" in Table 2).

When a rainbow color is slightly visible in the white image, but the text is clearly visible in the text display image, it is determined that the result is acceptable (fair, described as "B" in Table 2).

When a rainbow color is visible in at least a part of the white image and the outline of the text appears blurred in the text display image, it is determined that the result is unacceptable (no good, described as "C" in Table 2).

The column of "sharpness" in Table 13 shows evaluation results of sharpness of Manufacturing Examples 6 to 14.

**[Table 13]**

| | Sharpness |
|---|---|
| Manufacturing example 6 | A |
| Manufacturing example 7 | B |
| Manufacturing example 8 | A |
| Manufacturing example 9 | A |
| Manufacturing example 10 | A |
| Manufacturing example 11 | A |
| Manufacturing example 12 | A |
| Manufacturing example 13 | A |
| Manufacturing example 14 | C |

### <Explanation of Results>

As shown in Table 13, the light guide plates for image display of Manufacturing Examples 6 to 13 can be determined to have "good" or "fair" sharpness when the specular glossiness of the laminate is 120% or greater.

On the other hand, in the light guide plate for image display of Manufacturing Example 14, the specular glossiness of the laminate is as low as 100%, and it can be determined that the sharpness is "unacceptable".

### [Industrial Applicability]

The light guide plate for image display of the present invention is useful, for example, in display device applications for VR applications and AR applications, and is useful in display device applications such as head-up displays, wearable displays, and head-mounted displays.

### [Reference Signs List]

1: First resin base
2: First anchor coat layer
3: First barrier layer (first protective layer)
4: Hologram layer
5: Second barrier layer (second protective layer)
6: Second anchor coat layer
7: Second resin base
8: Second resin base
11: First laminate
12: Second laminate

## Claims

1. Alight guide plate for image display, comprising:
a laminate that is provided with a resin base, an anchor coat layer, and a barrier layer in this order; and
a hologram layer,
wherein the barrier layer is made of silicon oxynitride as a main component and a nitrogen element formulation, which is determined by X-ray photoelectron spectroscopy (XPS), in the barrier layer is greater than 0 atm% and 25 atm% or less.

2. The light guide plate for image display according to Claim 1, wherein the resin base includes at least one resin selected from the group consisting of poly(meth)acryl-based resin, epoxy resin, cyclic polyolefin-based resin, and polycarbonate-based resin.

3. The light guide plate for image display according to Claim 1 or 2, wherein the anchor coat layer includes at least one resin selected from the group consisting of acryl-based resin, urethane-based resin, and polyester-based resin.

4. The light guide plate for image display according to any one of Claims 1 to 3, wherein the laminate has hard coat layers on both surfaces of the resin base.

5. The light guide plate for image display according to any one of Claims 1 to 4, wherein a total ray transmittance of the laminate is 90% or more.

6. The light guide plate for image display according to any one of Claims 1 to 5, wherein a haze of the laminate is less than 0.1%.

7. The light guide plate for image display according to any one of Claims 1 to 6, wherein b* of the laminate measured by a spectroscopic colorimeter is less than 0.5.

8. The light guide plate for image display according to any one of Claims 1 to 7, wherein the moisture vapor permeability of the laminate is less than 0.01 g/m²/day.
